(19) **Europäisches Patentamt**

**European Patent Office**

**Office européen des brevets**

(11) **EP 1 163 478 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(21) Anmeldenummer: **00916959.0**

(22) Anmeldetag: **16.03.2000**

(51) Int Cl.7: **F24D 19/10**

(86) Internationale Anmeldenummer:
**PCT/EP2000/002326**

(87) Internationale Veröffentlichungsnummer:
**WO 2000/057111 (28.09.2000 Gazette 2000/39)**

(54) **FLUIDTRANSPORTSYSTEM**

FLUID TRANSPORT SYSTEM

SYSTEME DE TRANSPORT FLUIDIQUE

(84) Benannte Vertragsstaaten:
**AT BE CH CY DE DK ES FI FR GB GR IE IT LI LU MC NL PT SE**

(30) Priorität: **20.03.1999 DE 19912588**

(43) Veröffentlichungstag der Anmeldung:
**19.12.2001 Patentblatt 2001/51**

(73) Patentinhaber: **KSB Aktiengesellschaft 67227 Frankenthal (DE)**

(72) Erfinder:
• **WENDEL, Siegfried
  D-95463 Bindlach (DE)**
• **BRAUN, Marcus
  D-67574 Osthofen (DE)**
• **GRÖNING, Norbert
  D-67227 Frankenthal (DE)**
• **ILLY, Alois
  D-67117 Limburgerhof (DE)**
• **GABELMANN, Torsten
  D-67246 Dirmstein (DE)**
• **MEWES, Frank
  D-95447 Bayreuth (DE)**

(56) Entgegenhaltungen:
**GB-A- 1 556 421        US-A- 4 294 309
US-A- 4 294 402**

**Beschreibung**

Die Erfindung betrifft ein Transportsystem mit einem flüssigen Fluid zur thermischen Energieübertragung, wobei mindestens eine Pumpe in einem hydraulischen System ein Fluid zwischen Erzeuger und Verbraucher unter Überwindung von Rohrnetzwiderständen zirkulierend umwälzt, die Verbraucher in dem hydraulischen System variable oder feste Widerstände darstellen und eine Einrichtung zur Beeinflussung der Wärmetransportleistung, insbesondere über eine Veränderung einer Vorlauftemperatur im hydraulischen System, angeordnet ist.

In solchen Transportsystemen, die Verzweigungen eines Rohrleitungssystems aufweisen, tritt häufig das Problem auf, daß in Rohrleitungssträngen die tatsächlichen Durchflußmengen größer als die benötigten Durchflußmengen sein können, z. B. infolge geringerer hydraulischer Widerstände als geplant oder überdimensionierter Pumpen. Dies ist unabhängig vom Verwendungszweck des jeweiligen Transportsystems und kann bei Heizungs- oder Klimaanlagen, Versorgungs- oder Entsorgungssystemen oder sonstigen hydraulischen System mit darin installierten Pumpen auftreten. Beim Umwälzen solcher zu großer Durchflußmengen entstehen Strömungsgeräusche und es wird vor allem eine zu hohe Umwälzarbeit geleistet. Die zu hohe Umwälzarbeit, das Produkt aus hydraulischer Leistung und Betriebszeit, verursacht unnötig hohe Stromkosten für den Betrieb der Pumpe. Um dies zu verhindern, werden Einrichtungen zur Mengenbegrenzung eingesetzt, damit die jeweilige Durchflußmenge den bei der Auslegung eines Rohrleitungssystems gewünschten Sollwerten entspricht. Nachteilig bei der Verwendung solcher die Durchflußmenge begrenzender Einrichtungen sind deren relativ hohe Druckverluste, die während der gesamten Betriebszeit auftreten und von den verwendeten Pumpen überwunden werden müssen. Die Pumpe wird also für einen größeren Druckhöhenverlust ausgelegt, wodurch auch die elektrische Pumpenaufnahmeleistung höher als eigentlich notwendig ist.

Bei solchen Transportsystemen finden auch häufig mehrere Pumpen, Erzeuger oder Verbraucher Verwendung. Entsprechend dem Mengenbedarf werden zwei oder mehrere Pumpen parallel betrieben, um die gewünschte Fördermenge an die jeweiligen Verbraucher in den entsprechenden Rohrleitungssträngen transportieren zu können. Bei solchen Betriebszuständen kann es zeitweilig zur hydraulischen Überlastung der Pumpen kommen, insbesondere bei zu geringen hydraulischen Widerständen in den Rohrleitungssträngen bzw. wenn bei einem großen Förderstrom der Pumpen nur kleine Förderhöhen zu überwinden sind. Solche hydraulischen Überlastungen finden sich häufig bei optimierten Regelkennlinien von Pumpenanlagen, bei denen bei kleinen Förderströmen eine starke Reduzierung der Förderhöhe ausgewählt wurde. Ein solcher Überlastungszustand tritt kurz vor dem Zuschalten einer weiteren Pumpe zur Unterstützung einer bereits laufenden Pumpe auf. Bisher wurde zur Vermeidung eines solchen Überlastbetriebes bei Parallelschaltung von Pumpen eine größere Pumpe verwendet, deren Kennlinie zu kleineren Förderhöhen hin günstiger verläuft oder indem eine Anpassung an der Regelkennlinie vorgenommen wurde. Beide Lösungen haben aber den Nachteil, daß eine Pumpenanlage nicht mehr optimal im wirtschaftlichen Bereich betrieben wird.

Ein analoges Problem der zeitweiligen Überlastung einer Pumpe in einem Rohrleitungssystem ist auch bei Wärme- und Kältekreisläufen bekannt. Wenn beispielsweise in einem Verwaltungsgebäude an einem Wochenanfang oder nach einer Nachtabsenkung eine Anlage hochgefahren wird, müssen in dieser Anfahrphase sehr hohe Fördermengen umgewälzt werden. Bedingt ist dies durch die Thermostatventile der Verbraucher, die alle maximal öffnen, um eine schnelle Anpassung der Raumtemperatur zu bewirken. Da solche Anlagen in erschwerender Weise oftmals keinen ausreichenden hydraulischen Abgleich aufweisen, werden durch diesen hohen Durchfluß auch die Wärme- oder Kälteerzeuger, die häufig in Kaskadenschaltung ausgeführt sind, stark strapaziert. Denn während einer solchen Anfahrphase werden sie außerhalb ihrer spezifizierten Betriebsbedingungen betrieben. Auch daraus resultiert ein unwirtschaftlicher Betrieb, der hohe Betriebskosten und zum Teil eine hohe Belastung oder sogar unnötige Frühschäden zur Folge haben kann.

Hydraulische Pumpenkreisläufe mit mehreren Verbraucherkreisen, häufig bei Wärmeversorgungsanlagen anzutreffen, werden für einen Kosten sparenden Dauerbetrieb hydraulisch abgeglichen. Dazu werden in jedem Rohrleitungsstrang und meist auch an den Verbrauchern sogenannte Strangregulierventile eingebaut. Mit deren Hilfe wird ein Betriebszustand, bei dem alle Verbraucher eines beeinflußbaren Rohrleitungsstranges gleichzeitig den maximalen Bedarf haben, mittels der Strangregulierventile auf den benötigten maximalen Durchfluß eingedrosselt. Da hierzu bei größeren verzweigten Anlagen ein erheblicher Meßaufwand erforderlich ist, ist ein solcher Strangabgleich sehr zeitaufwendig und wird erfahrungsgemäß sehr selten ordnungsgemäß durchgeführt. Durch die DE-A 197 25 376 ist eine Strangregulierarmatur bekannt, mit deren Hilfe der Arbeitsaufwand bei der Einregulierung von Rohrleitungssträngen verringert wird. Aber auch bei einem richtig durchgeführten hydraulischen Abgleich der einzelnen Stränge in einem verzweigten Rohrleitungssystem wird damit nur im Vollastfall eine bestimmte Aufteilung des Gesamtförderstromes auf die einzelnen Rohrleitungsstränge erreicht. Bei einem Betrieb in einem Teillast-Zustand wirkt ein solcher statischer Abgleich eines Rohrleitungsstranges manchmal in unkalkulierbarer Weise. Insbesondere dann, wenn die in einem hydraulischen System verwendeten Pumpen in ihrer Drehzahl ungeregelt betrieben werden, können sich auch in einem für den Vollastfall abgeglichenen Rohrleitungsstrang auf Seiten der Verbraucher an den pumpennahen Strängen wesentlich zu hohe Differenzdrücke einstellen.

Bei Verwendung von Durchflußregelventilen, wie sie beispielsweise durch die DE-C 34 32 494 bekannt sind, können ebenfalls Probleme entstehen. Denn solche Durchflußregelventile werden in dem vorstehend genannten Fall in einem äußerst ungünstigen Regelbereich betrieben, da aufgrund eines bestehenden und zu hohen Differenzdruckes $\Delta_P$ das Regelventil selbst nur ganz leicht geöffnet ist. Dadurch ist eine für einen hohen Komfort gewünschte stetige, hinreichend genaue Regelung nicht mehr möglich. Teilweise gehen solche Regelventile bzw. die entsprechenden Regelkreise bei solchen Betriebsbedingungen vom stetigen Betrieb in einen unstetigen Auf-Zu-Betrieb über. Letzterer führt zu sehr großen Schwingungen der Regelgröße einer Regeleinrichtung, wodurch ein gravierender Komfortverlust entsteht. Zusätzlich entstehen in einem Rohrleitungssystem unerwünschte Strömungsgeräusche bei einem nur leicht geöffnetem Ventilsitz eines Regelventils bei hohem Differenzdruck.

Ungünstige Einflüsse ergeben sich auch bei einem Rohrleitungssystem, z. B. von Heizungsanlagen mit witterungsgeführter Vorlauftemperaturregelung und/oder einer Nachtabsenkung, bei dem bei fallender Vorlauftemperatur im Rohrleitungssystem die Regelventile der angeschlossenen Verbrauchern stärker öffnen. Solche öffnenden Regelventile, die üblicherweise als Thermostatventile ausgebildet sind, vergrößern den umzuwälzenden Volumenstrom und damit den Leistungsbedarf der Pumpe. Eine beabsichtigte thermische Leistungseinsparung wird somit durch eine höhere elektrische Pumpenleistung wieder teilweise vernichtet.

Zur Optimierung eines Pumpenbetriebes in einem hydraulischen Transportsystem sind verschiedene Möglichkeiten bekannt. Eine Pumpe mit konstanter Drehzahl ist üblicherweise so ausgelegt, daß sie im Spitzenlastbetrieb die Nennfördermenge erbringt. Im Teillastbetrieb verändert sich der ursprüngliche Betriebspunkt aber zu geringerer Fördermenge hin bei gleichzeitigem Anstieg der Förderhöhe. Als Folge davon ergibt sich ein unnötiger Verbrauch von Antriebsenergien, eine starke Strömungsgeräuschentwicklung und dadurch eine Belastung der gesamten Anlagenteile.

Bei drehzahlgeregelten Pumpen mit einer Regelkennlinie $\Delta p$ = konstant wird bei Änderungen der Rohrnetzkennlinie die Förderhöhe in der Anlage konstant gehalten.

Weiter ist es bekannt, eine Regelung nach der Anlagenkennlinie vorzusehen. Eine solche Anpassung der Pumpenleistung sieht in einen Q-H Diagramm keine Vorgabe von horizontalen Regelkennlinien vor, sondern dem Regelsystem werden an den wirklichen Förderhöhenbedarf einer Anlage angepaßte Regelkennlinien vorgegeben. Der Förderstrom der Pumpe wird mit einem zusätzlichen externen physikalischen Volumenstromgeber erfaßt, dessen Meß-Signal in der Regeleinrichtung berücksichtigt wird. Eine Übersicht solcher Volumenstromgeber für die Durchflußmessung in einem Rohrnetz findet sich in der Zeitschrift atp, Automatisierungstechnische Praxis, 36. Jahrgang, 1994, Seiten 22 bis 26. Solche Geber verursachen jedoch aufgrund ihres komplexen Aufbaus erhebliche Kosten, weshalb sie nur eine geringe Verbreitung gefunden haben. Nachteilig bei der Verwendung solcher externer Volumenstromgeber ist die durch deren hohe Anschaffungskosten bedingte Verschlechterung der Wirtschaftlichkeit einer Anlage.

Stellt sich in einem solchen Transportsystem infolge einer Widerstandsänderung eines Verbrauchers, beispielsweise durch Öffnen eines thermostatischen Regelventiles, eine andere Anlagenkennlinie ein, dann kann mit Hilfe eines Regeleinrichtung durch Veränderung der Pumpendrehzahl ein günstigerer Betriebspunkt Verwendung finden. Von sich aus vermag eine Drehzahlregelung keinen Einfluß auf den in dem Rohrleitungssystem notwendigen Volumenstrom auszuüben. Die Drehzahlregelung stellt immer nur eine Reaktion auf das Verändern der Anlagenkennlinie dar.

Der Erfindung liegt das Problem zugrunde, für Transportsysteme, in deren Rohrleitungssträngen der Strömungswiderstand und/oder die Wärmeleistung durch integrierte Verbraucher veränderbar sind, in allen Lastzuständen des gesamten hydraulischen Systems eine vorher bestimmte Aufteilung des Förderstromes im Vollastfall und/oder eine optimierte Aufteilung im Teillastfall in den verschiedenen Rohrleitungszweigen sicherzustellen, wobei mit möglichst geringen Investitionskosten und bei geringem Energieaufwand die Förderaufgabe von Umwälzpumpen durch eine genaue optimierte Drehzahlregelung erreicht wird.

Die Lösung dieses Problems sieht vor, daß in einem Hauptstrang und/oder in mindestens einem Nebenstrang des hydraulischen Systems eine Drosselarmatur mit elektronischer Volumenstrommeßeinheit eingebaut ist, daß der gemessene Volumenstrom als Istwert in eine Steuereinrichtung, eine Regeleinrichtung oder eine Auswerteelektronik einfließt, daß die Auswerteelektronik eine Führungsgröße für die Regeleinrichtung liefert und daß die Regeleinrichtung über eine Stelleinrichtung die Drehzahl der Pumpe und/oder die Drosselstellung einer oder mehrerer Drosselarmaturen verändert.

Mit Hilfe einer als kostengünstiges Serienbauteil produzierten Drosselarmatur und deren Kombination mit einer elektronischen Volumenstrommeßeinheit kann mit sehr geringen Investitionskosten eine Erfassung des momentan in einem Strang eines hydraulischen Systems vorherrschenden Volumenstromes erfolgen. Die genaue Kenntnis des tatsächlichen Volumenstromes ermöglicht es, den jeweiligen Strang genau auf den Sollwert einzuregeln. Dies kann durch Veränderung der Drehzahl der Pumpe, durch Veränderung der Drosselstellung von einer oder mehreren in das hydraulische System integrierten Drosselarmaturen oder durch eine Kombination von beiden erfolgen. Somit ist eine gegenüber den bisherigen bekannten Systemen gravierende Verbesserung der Regelgenauigkeit und Energieeinsparung möglich. Als Hauptstrang wird in diesem Zusammenhang ein Rohrstrang betrachtet, in dem ein als Energieerzeuger anzusehendes Bauteil angeordnet ist. Bei einem Transportsystem mit einem flüssigen Fluid zur thermischen Energieübertragung in Form eines Heizsystems wäre dies ein Wärmeerzeuger, z. B. ein Heizkessel. Bei einem Transportsystem in Form eines Kältekreislaufes wäre dies z. B. ein Kaltwasseraggregat. Als Nebenstrang oder Nebenstränge werden diejenigen Teile des Transportsystems angesehen, in denen Verbraucher angeordnet sind, die den Energiegehalt des zuströmenden flüssigen Fluids verändern.

In Verbindung mit einer in ein Rohrleitungssystem einzubauenden Armatur ist es möglich, einen kostengünstigen Volumenstromgeber zu realisieren. Auf die bisher einzubauenden zusätzlichen Volumenstromgeber, welche weitere und damit unnötige Dichtungsstellen sowie erhöhten Platzbedarf zur Folge haben, kann verzichtet werden.

Es ist auch möglich, Volumenströmen die jeweils zugehörige Temperatur zuzuordnen, um Wärmemengen zu definieren. Damit kann aus Volumen und Temperatur beim bekannten Fluid (Fluiddichte) die im System umgewälzte und zu verteilende Wärmemenge bestimmt und in Abhängigkeit von dem Verbraucherverhalten optimiert werden.

Die Auswerteelektronik setzt die vom Volumenstromsensor und/oder einem zusätzlichen Temperatursensor oder ähnlichen Sensoren gelieferten elektronischen Eingangssignale in elektronische Ausgangsgrößen für Regel- und Steuereinrichtung um. Hierbei handelt es sich um Sollwerte, Grenzwerte oder Führungsgrößen. Die Auswerteelektronik verfügt zu diesem Zweck in der Regel über mindestens einen Microprozessor und hinterlegte Kennlinien, Einstellwerte, Algorithmen oder Fuzzy-Regeln zwecks Beeinflussung einer Regel- oder Steuereinrichtung.

Gemäß einer Ausgestaltung der Erfindung ist die Drosselarmatur und/oder die elektronische Volumenstrommeßeinheit mit einem Temperatursensor versehen. Das vom Temperatursensor gelieferte Meßsignal fließt in die Auswerteelektronik ein und erlaubt eine bedarfsgerechte Bestimmung des erforderlichen Volumenstromes in Abhängigkeit von einer Vorlauftemperatur und/oder einer Außentemperatur des hydraulischen Systems. Bei einer Erfassung einer Vorlauftemperatur mittels der Drosselarmatur kann in einfachster Weise ein zusätzliches Signal als Ist-Wert eines Fluidzustandes innerhalb des hydraulischen Systems für eine Regeleinrichtung geliefert werden. Auch diese Möglichkeit ergibt mit einem kostengünstigen Standardbauteil in Form einer Drosselarmatur, bzw. einer Absperrarmatur mit Drosseleigenschaften und der Kombination mit kostengünstigen elektronischen Temperatursensoren eine Verbesserung der Meßdatenerfassung. Dies läßt sich in sehr einfacher Weise durch Integration eines Temperatursensors in die elektronische Volumenmeßeinheit verwirklichen. Bei einem Transportsystem, dessen thermische Energieübertragung in Abhängigkeit von einer Außentemperatur geregelt wird, kann ein solches äußeres Temperatursignal in einfacher Weise ein Regelsystem des Stellantriebes der Drosselarmatur, eine Regeleinrichtung, Auswerteelektronik oder Steuereinrichtung, eingespeist werden.

Sollten innerhalb des Rohrleitungssystems durch Änderung des Widerstandes der Verbraucher, beispielsweise durch darin eingebaute Regelarmaturen in Form von Thermostatventilen, die Rohrnetzkennlinie eine Veränderung erfahren, dann kann darauf problemlos mit Hilfe der aktiv in das Regelsystem eingreifenden und den Durchflußwiderstand des jeweiligen Rohrleitungsstranges verändernden Armatur und der Regeleinheit reagiert werden.

Bei einem solchen Transport system, dessen Pumpe drehzahlgeregelt ist, Einrichtungen zur Beeinflussung der Wärmetransportleistung im hydraulischen System angeordnet sind und bei dem durch mindestens eine zwischen einer Vorlaufleitung und einer Rücklaufleitung angeordnete Bypassleitung eine verbraucherseitige Veränderung einer Vorlauftemperatur im hydraulischen System erfolgt, sieht eine andere Ausgestaltung der Erfindung vor, daß in einem Hauptstrang und/oder in mindestens einem Nebenstrang des hydraulischen Systems mindestens eine Drosselarmatur in Kombination mit einer elektronischen Volumenstrommeßeinheit eingebaut ist, daß der gemessene Volumenstrom in eine Steuer- oder Regeleinrichtung einfließt, daß eine gemessene Vorlauf und/oder Rücklauftemperatur $T_V$, $T_{RL}$ in die Steuer- oder Regeleinrichtung einfließt und daß die Steuer- oder Regeleinrichtung über eine Stelleinrichtung die Drosselstellung einer oder mehrerer Drosselarmaturen verändert. Mit einer solchen Lösung wird in Abhängigkeit vom Zustand innerhalb eines Stranges durch die Änderung der Drosselstellung eine Anpassung an den jeweiligen Bedarf bewirkt. Ebenso kann über die Steuer- oder Regeleinrichtung an einer Stelleinrichtung die Drehzahl der Pumpe verändert werden, um dem in der Anlage erforderlichen Bedarf entsprechen zu können. Die Stelleinrichtung der Pumpe ist dazu in vorteilhafter Weise als elektrische Stelleinrichtung ausgebildet. Ebenso kann die Steuer- oder Regeleinrichtung über Stelleinrichtungen die Drosselstellung einer oder mehrerer Drosselarmaturen und die Drehzahl der Pumpe verändern.

Ein hydraulisches System aufweisende Anlagen, in denen bereits eine selbstregelnde Pumpe mit vom Förderstrom abhängigen Förderhöhensollwert angeordnet ist, können durch Einbau von mindestens einer Drosselarmatur in Kombination mit einer elektronischen Volumenstrommeßeinheit in ihrem Regelverhalten verbessert werden.

Die Auswirkung des Verbraucherverhaltens wird besser erfaßt, wenn eine elektronische Volumenstrommeßeinheit in den Verbraucherkreisläufe im Bereich vor einem ersten Verbraucher oder nach einem letzten Verbraucher und zwischen den Einmündungsorten der Bypassleitung angeordnet ist. Dazu dient auch die Maßnahme, in einem mit einer Bypassleitung ausgerüsteten Verbraucherkreislauf mindestens zwei Volumenstrommeßeinheiten anzuordnen. Oder daß eine der Volumenstrommeßeinheiten einen Teilstrom des gesamten Förderstromes erfaßt. Durch entsprechende Kombinationen in der Anordnung der Volumenstrommeßeinheiten lassen sich entsprechend dem Aufbau eines hydraulischen Systems die geeignetsten Einbauorte für eine Mengenerfassung auswählen.

Die Anordnung von den in den Ansprüchen 19 bis 20 beschriebenen Armaturen dient ebenfalls der Verbesserung des Regelverhaltens.

Die weitere Ausgestaltungen der Erfindung beschreiben die Funktionen der Regeleinrichtung und werden in den Ausführungsbeispielen näher erläutert.

Ausführungsbeispiele der Erfindung sind in den Zeichnungen dargestellt und werden im folgenden näher beschrieben. Es zeigen die

Fig. 1-4　　　verschiedene vereinfachte Darstellungen von hydraulischen Systemen, die

Fig. 5　　　eine Anordnung einer Armatur als Überlastschutz einer Pumpe, die

Fig. 6　　　eine Schutzeinrichtung für parallel betriebene Pumpen, die

Fig. 7　　　ein zur Fig. 6 gehöriges Q,H-Diagramm, die

Fig. 8　　　eine Schutzeinrichtung für Pumpen in Anfahrbetrieb mit zeitweiliger Überlast, die

Fig. 9　　　eine aktive Regulierung in Rohrleitungssträngen von Transport-systemen hydraulischer Flüssigkeiten, die

Fig. 10　　　eine von einer Pumpenregelung unabhängige aktive Strangregulierung in einem Verbraucherstrang, die

Fig. 11　　　eine Pumpenleistungsanpassung durch Volumenstromführung, die

Fig. 12　　　ein zur Fig. 11 gehöriges Q,H-Diagramm, die

Fig. 13　　　eine Regelung eines Verbraucherstranges einer Heizungsanlage mit Außentemperaturerfassung und Mischventil, die

Fig. 14　　　eine zur Fig. 13 gehörige Regelkennlinie eines Q,H-Diagrammes, die

Fig. 15　　　eine Variante von Fig. 13, in der das Mischventil ersetzt wurde, die

Fig. 16　　　ein Auslegungsdiagramm für eine Heizungsanlage, die

Fig. 17　　　eine Großanlage, die

Fig. 18 + 19　　　eine Anordnung mit zwei Volumenstrommeßeinheiten und die

Fig. 20　　　eine Integration eines Reglers in Anlagekomponenten.

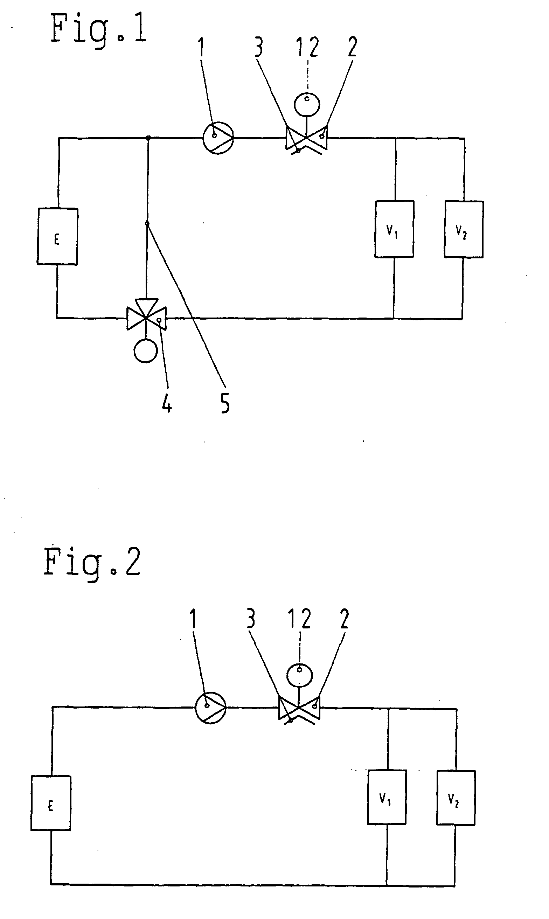

Die Figuren 1 bis 4 zeigen unterschiedlich aufgebaute hydraulische Systeme mit verschiedenen Anordnungen von darin befindlichen Elementen. Es ist die Lage einer mit einem Stellantrieb ausgestatteten Drosselarmatur in verschiedenen Rohrleitungssträngen gezeigt. Einrichtungen zum Messen, Steuern und Regeln sind in diesen Figuren 1 bis 4 nicht dargestellt.

In Fig. 1 ist ein einfaches hydraulisches System dargestellt, bei dem ein Erzeuger E, welcher je nach Systemaufbau als Wärmequelle oder Wärmesenke funktioniert, mit einer Pumpe 1 ausgerüstet ist, welche ein Fluid innerhalb des hydraulischen Systems umwälzt. In diesem Zusammenhang wird der Weg vom Erzeuger E zu den Verbrauchern V1, V2 als Vorlauf bezeichnet und der Weg von den Verbrauchern zurück zum Erzeuger E, als Rücklauf. Je nach Gestaltung des Systems kann eine Drosselarmatur 2 mit elektronischer Volumenstrommeßeinheit 3 im Vorlauf oder im Rücklauf angeordnet sein. Eine von einem 3-Wege-Ventil 4 beeinflußte Beimischleitung 5 ermöglicht die Einspeisung eines Fluidanteiles aus dem Rücklauf in den Vorlauf. Das 3-Wege-Ventil 4 ist auch unter anderen Begriffen bekannt. Bei einer Anordnung im Vorlauf wird es auch als Mischventil und bei einer Anordnung im Rücklauf als Verteilventil bezeichnet. Bei einer Heizungsanlage würde somit kälteres Rücklaufwasser dem aus einem Erzeuger E in Form eines Heizkessels entstammenden heißen Vorlaufwassers beigemischt werden. Somit kann der Energiegehalt des zu den Verbrauchern V1, V2 zu transportierenden Fluids beeinflußt werden. Eine Drosselarmatur 2 mit elektronischer Volumenstrommeßeinheit 3 ist hier im Vorlauf des hydraulischen Systems angeordnet.

Die Darstellung der Fig. 2 unterscheidet sich von der Fig. 1 durch die fehlende Beimischleitung und das fehlende 3-Wege-Ventil. Hier ist ein ausschließlich aus einem Hauptstrang bestehendes hydraulisches System gezeigt.

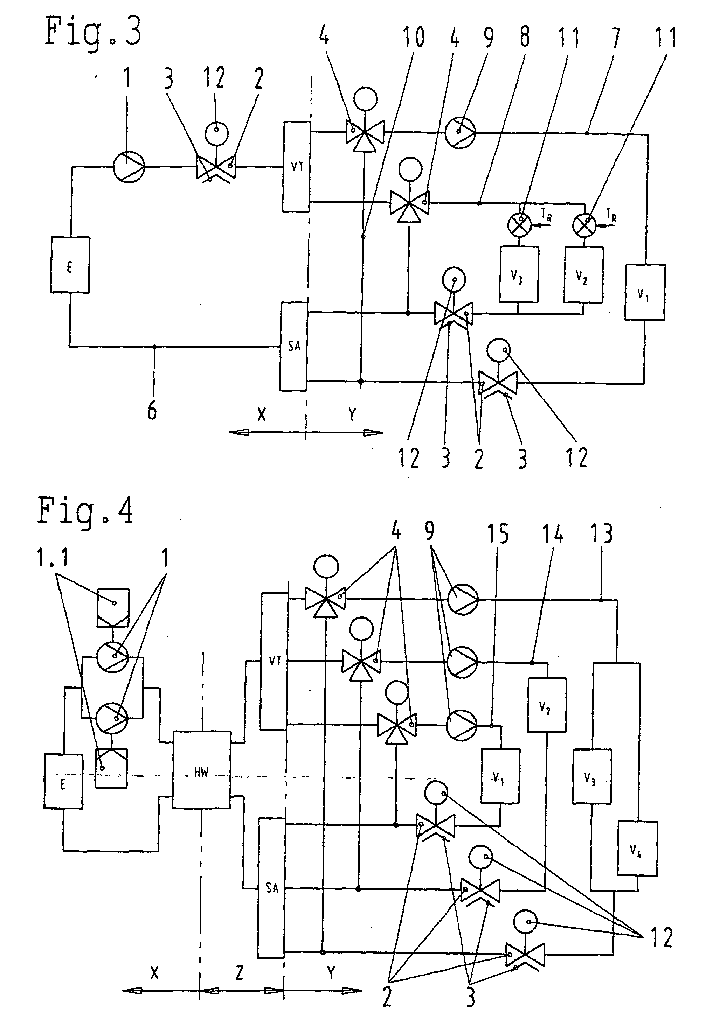

Die Figur 3 zeigt ein hydraulisches System, welches mehrere Rohrleitungsstränge 6, 7 und 8 aufweist. Mit Hilfe der gestrichelt dargestellten senkrechten Linie und den davon ausgehenden Pfeilen X und Y wird eine Unterteilung der gezeigten Rohrleitungsstränge 6 bis 8 vorgenommen. Der im Bereich X befindliche Rohrleitungsstrang 6 leitet ein Fluid durch den Erzeuger E und wird als Hauptstrang betrachtet. Die im Bereich Y befindlichen Rohrleitungsstränge 7, 8 sind Teile der Verbraucherkreise und werden als Nebenstränge betrachtet. Ein umzuwälzendes Fluid strömt dabei von einem Erzeuger E, bei dem es sich um einen Heizkessel handeln kann, in einen Verteiler VT, von wo aus es in zwei als Nebenstränge wirkende Rohrleitungsstränge 7, 8 strömt. Der Rohrleitungsstrang 7 verfügt in diesem Ausführungsbeispiel über einen Verbraucher V1 mit konstantem Widerstand und einer eigenen Pumpe 9, der ein 3-Wege-Ventil vorgeschaltet ist. Das als Mischventil wirkende 3-Wege-Ventil mischt einen Teil des von dem Verbraucher V1 kommenden Fluids dem Vorlauf zum Verbraucher V1 durch eine Leitung 10 zu. Der restliche Fluidteil gelangt über einen Sammler SA durch einen Rücklauf zum Erzeuger E zurück.

Der andere Rohrleitungsstrang 8 zeigt in diesem Ausführungsbeispiel in Parallelschaltung Verbraucher V2, V3, die in diesem Nebenstrang als variable Widerstände wirken. Dies ist bedingt durch Thermostatventile 11, die in Abhängigkeit von der Raumtemperatur TR am Ort der Verbraucher die Energieübertragung beeinflussen. Zur Verbesserung des Regelverhaltens eines solchen hydraulischen Systems sind sowohl im Hauptkreis 6 als auch in den Rohrleitungssträngen 7, 8 der Verbraucherkreise Armaturen 2 mit elektronischer Volumenstrommeßeinrichtung 3 und Stellantrieb 12 angeordnet.

Die Figur 4 zeigt ein komplexer gestaltetes hydraulisches System, welches sich gegenüber dem Ausführungsbeispiel der Figur 3 durch einen zusätzlichen Zwischenkreis Z unterscheidet. Der Erzeugerkreis X verfügt in diesem Fall über zwei parallel geschaltete Umwälzpumpen 1, mit elektronischer Drehzahlregelung 1.7, mit dessen das umzuwälzende Fluid in eine hydraulische Weiche HW gefördert wird. Die parallel geschalteten Pumpen können separat oder zusammen oder wechselnd betrieben werden. Sie verbessern die Ausfallsicherheit einer solchen Anlage und/oder gewährleisten im Vollastbetrieb die nötige Umwälzung der angeforderten Energiemengen.

Die hydraulische Weiche HW, die eine Verbindung zwischen dem hier als Hauptkreis wirkenden Erzeugerkreis X und dem Zwischenkreis Z herstellt, funktioniert als Mischer. Dies sei am Beispiel einer Heizung erklärt. Aus dem die Nebenstränge enthaltenden Verteilerkreis Y zurückfließendes kühleres Fluid wird im Sammler SA gesammelt und strömt von dort als kälteres Medium zurück zur hydraulischen Weiche HW. In die hydraulische Weiche HW wird heißeres Fluid vom Erzeuger E durch die Umwälzpumpen 1 eingespeist. Innerhalb der hydraulischen Weiche HW findet eine Entkoppelung zwischen Erzeugerkreis und den Nebensträngen statt.

Im Verbraucherkreis Y sind die Nebenstränge in Form der Rohrleitungsstränge 13 bis 15 mit Drosselarmaturen 2 und elektronischen Volumenstrommeßeinheiten 3 in den Rücklaufleitungen zum Sammler SA angeordnet. Im Rohrleitungsstrang 13 ist eine Parallelschaltung der V3, V4 gezeigt. Einzelne Verbraucher können auch in Reihe geschaltet sein.

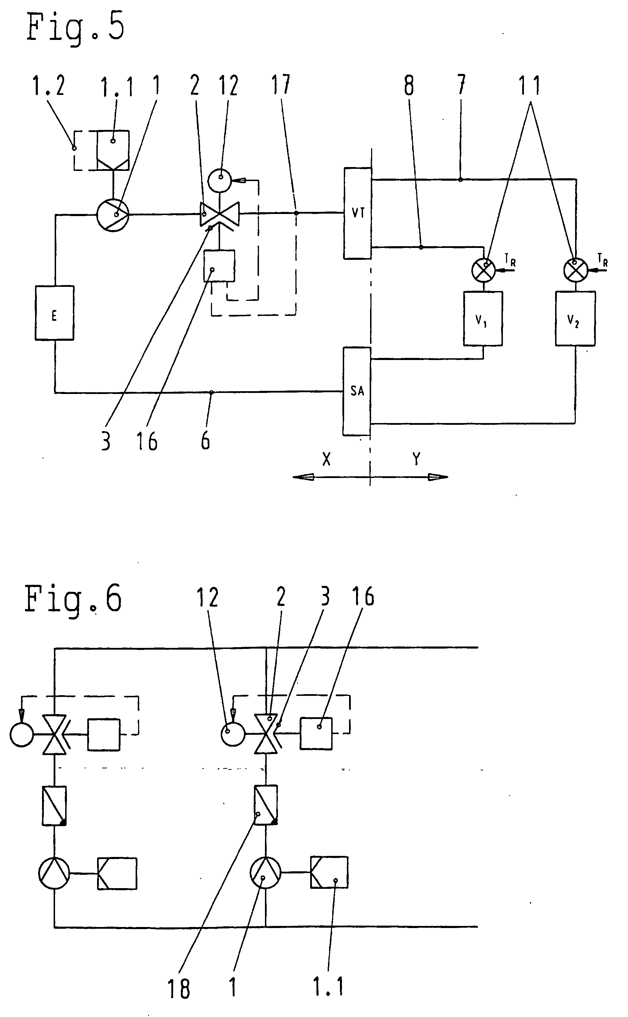

In der Fig. 5 ist ein Schaltschema eines Transportsystemes gezeigt, welches folgende Komponenten aufweist: Einen Energieerzeuger E, z. B. ein Heizkessel einer Heizungsanlage, eine in Strömungsrichtung nachgeordnete Pumpe 1, die einen Volumenstrom zu einem Verteiler VT fördert. Vom Verteiler VT zweigen verschiedene Rohrleitungsstränge 7, 8 ab, in denen Verbraucher V1, V2 angeordnet sind. Innerhalb der Verbraucher, bei denen es sich um Heizkörper einer Heizungsanlage, Kondensatoren oder sonstige Wärmetauscher handeln kann, erfolgt eine Energieabgabe an die Umgebung, so daß das aus den Verbrauchern V1, V2 abströmende Fluid einen geänderten Energieinhalt aufweist. Ein Sammler SA nimmt das von den Verbrauchern V1, V2 durch Rücklaufleitungen abfließende Fluid auf und leitet es durch eine Rücklaufleitung 6 dem Erzeuger E zu. Dort erfolgt, falls es sich um einen Heizkessel handelt, durch Energiezufuhr eine Erhöhung der Fluidtemperatur.

Zwischen Pumpe 1 und Verteiler VT ist eine Drosselarmatur 2 mit Einrichtungen 3 zur elektronischen Messung des Volumenstromes angeordnet. Sie verfügt über einen motorischen Stellantrieb 12 und eine elektronische Auswerteeinheit 16. In der Auswerteeinheit 16 ist der für dieses System maximal zulässige Durchfluß $Q_{max}$ abgespeichert. Wird durch Verringerung des Widerstandes in den Verbrauchern V1, V2 der Durchfluß in dem System erhöht - es tritt also eine erhöhte Abnahme durch die Verbraucher V1, V2 auf - so wird dieser erhöhte Durchfluß von der elektronischen Volumenstrommeßeinheit 3 der Drosselarmatur 2 erfaßt und ein entsprechendes Signal der Auswerteeinheit 16 in der Drosselarmatur 2 zugeführt. Erreicht der Volumenstrom den Bereich des für diese Anlage errechneten und festgelegten Bereich der maximalen Fördermenge $Q_{max}$, so wird über ein Stellsignal und mit Hilfe des Stellantriebs 12 der Durchfluß im Wege eines Drosseln auf $Q_{max}$ begrenzt. In diesem Zusammenhang ist es unerheblich, ob die Drehzahl der Pumpe 1 konstant ist oder durch eine Regelung 1.1 variabel geführt wird. Der Betriebspunkt der Pumpe wandert auf der Pumpen- bzw. Regelkennlinie z. B. mit Δp=konst hin zu kleinerem Förderstrom bei größerer bzw. konstanter Förderhöhe. Der Pumpenbetriebspunkt wird auf der Pumpen- bzw.

Regelkennlinie in Richtung des optimalen Wirkungsgrades gedrosselt. Damit wird die Pumpe vor zu hohen Förderströmen geschützt und es wird verhindert, daß die Pumpe ohne Rücksicht auf den Wirkungsgrad im Überlastbereich läuft. Durch entsprechende Hinterlegung der für die verwendete Pumpe zulässigen maximalen Durchflußmenge in die Auswerteeinheit 16 der Armatur 2, wird die Pumpe 1 in ihren Nennbetriebspunkt gezwungen. Sie läuft daher im Bereich ihres günstigsten Wirkungsgrades.

Erfolgt auf Seiten der Verbraucher bei Erreichung des gewünschten Istzustandes eine Reduzierung der Wärmeabgabe, beispielsweise durch Drosseln der Durchflußmenge, mißt die Armatur 2 die Reduzierung der Durchflußmenge und liefert mit Hilfe der Auswerteelektronik 16 ein Stellsignal an den Stellmotor 12, welcher die bestehende Drosselung der Armatur zurücknimmt. Somit ergibt sich wieder eine flachere Kennlinie. Die Pumpe arbeitet für diese Durchflußmenge in einem günstigeren Betriebspunkt. Bei kleineren Förderströmen Q als einem eingespeicherten $Q_{opt}$ oder $Q_{max}$ treten daher keine zusätzlichen Verluste in der Armatur 2 auf, da diese dann in vollständig geöffneter Stellung gehalten wird. Die Begrenzungsfunktion der Armatur wird daher nur dann aktiv, wenn der für die jeweilige Pumpe zulässige maximale Förderstrom $Q_{max}$ erreicht wird.

Durch einen Temperatursensor 17, mit dessen Hilfe die Vorlauftemperatur zwischen Pumpe 1 und Verteiler VT gemessen wird, ist es in einfacher Weise möglich, eine solche Begrenzung des Volumenstroms auch während eines Betriebszustandes vorzusehen, in dem die Vorlauftemperatur abgesenkt wird. Zu diesem Zweck wird in die Auswerteeinheit 16 eine Kennlinie hinterlegt, welche die Fördermenge in bezug auf die Vorlauftemperatur begrenzt. Mit Hilfe dieser Funktion ist es möglich, mit dieser Armatur dem Verhalten von Thermostatventilen 11, die an den Verbrauchern V1, V2 angeordnet sind, entgegenzuwirken. Diese Funktion ermöglicht eine optimale Energieeinsparung bei Umwälzpumpen, die mit einer stufenlosen Drehzahlregelung 1.1 ausgestattet sind: Bei solchen Pumpen erfolgt eine Differenzdruckregelung, in dem der Druck vor und hinter der Pumpe erfaßt wird und der Differenzdruck entweder konstant oder als Funktion von der Fördermenge variabel gehalten wird. Die Pumpe wälzt dann nur den tatsächlich notwendigen Volumenstrom um und ein unnötig hoher Volumenstrom durch Veränderung der Drosselwirkung der Armatur wird vermieden.

Mit der Erfassung bzw. Messung des Volumenstromes ist grundsätzlich auch der Massestrom bzw. die Durchflußmenge bestimmbar. Dies erfolgt durch Zuordnung der Fluiddichte zum Volumenstrom.

Für diejenigen Anwendungsfälle, bei denen eine autarke Durchflußbegrenzung im Transportsystem durch Drosselung der Armatur 2 nicht gewünscht ist, kann die Auswerteeinheit 16 einen von der Vorlauftemperatur abhängigen Differenzdrucksollwert erzeugen. Die Armatur 2 drosselt in diesem Fall nicht aktiv, sondern deren Auswerteeinheit 16 berechnet aufgrund der erfaßten Meßdaten und der abgespeicherten Parametrierung (= Kennlinienhinterlegung durch Eingabe von Werten), einen günstigeren Förderhöhen-Sollwert. Dieser variable Förderhöhen-Sollwert wird entweder einer Regelpumpe mit integrierter ΔP-Regelung oder auch einem konventionellen Pumpenregelsystem als Führungsgröße vorgegeben. In diesen Fällen verfügt die Regelpumpe über einen entsprechenden Sollwerteingang. Für einen solchen Fall ist in der Fig. 5 die Pumpe 1 mit einem gestrichelt dargestellten Regler 1.2 ausgerüstet.

Die Fig. 6 zeigt die Verwendung der Armatur 2 als Schutzeinrichtung für Pumpen 1 im Parallelbetrieb. Während des Betriebes überwacht jeweils eine Armatur 2 den Förderstrom der im selben Strang befindlichen Pumpe. Im Bedarfsfall ist die Armatur zwischen den Mengenpunkte Q = 0 und Q = $Q_{Grenz}$ immer vollständig geöffnet. Durch Drosseln werden in der Armatur 2 Zusatzverluste $H_V$ erzeugt. Eine Rückschlagarmatur 18 verhindert eine Rückströmung durch die zweite Pumpe.

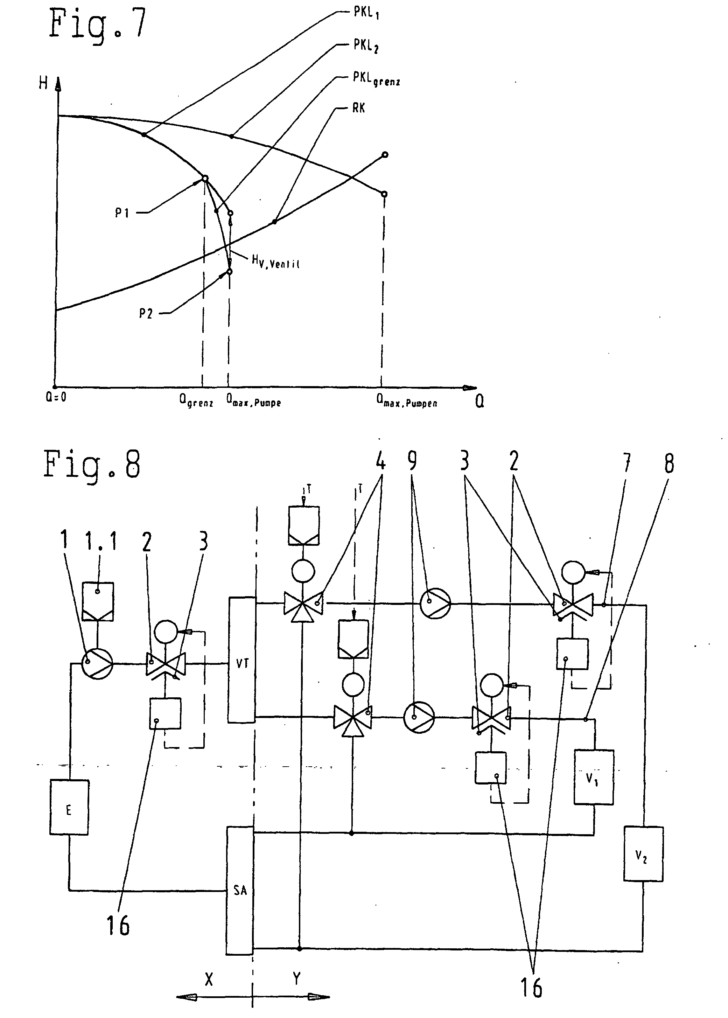

Die Fig. 7 zeigt ein QH-Diagramm mit den Kennlinien der beiden Pumpen aus Fig. 6. Desweiteren ist darin eine Regelkennlinie RK desjenigen Rohrleitungssystems eingezeichnet, welches von den beiden Pumpen versorgt wird. Die mit starker Strichstärke gezeichnete Pumpenkennlinie PKL-1 entspricht der Einzelkennlinie einer Pumpe. Die Linie PKL-2 ist die entsprechende Kennlinie für den Parallelbetrieb zweier Pumpen. Diese Kennlinien entsprechen einem Betriebszustand, bei dem die zugehörigen Drosselarmaturen vollständig geöffnet sind. Da die Förderdaten der beiden Pumpen 1 bekannt sind, werden die durch zeitweiliges Drosseln der Armaturen erzeugten Zusatzverluste $H_{V,ventil}$ jeweils so gewählt, daß die Pumpen einen Arbeitspunkt mit der Regelkennlinie RK einnehmen. Zu diesem Zweck ist in jeder Armatur in deren Auswerteeinheit eine Drosselkennlinie mit mindestens zwei Kennlinienpunkten hinterlegt.

Die Kennlinienpunkte P1, P2 sind so gewählt, daß in einem Durchflußbereich von Q = 0 bis zu einer durch Messung feststellbaren Grenzdurchflußmenge $Q_{Grenz}$ die Drosselarmatur vollständig geöffnet ist und damit den geringstmöglichen Widerstand für die zugehörige Pumpe darstellt. In dem QH-Diagramm der Fig. 7 entspricht daher der erste Kennlinienpunkt P1 der als Grenzwert festgelegten Durchflußmenge $Q_1 = Q_{grenz}$. und $H_{V1} = H_{V, min}$. Stellt die Drosselarmatur bei der Messung der Durchflußmenge einen Wert fest, welcher der hinterlegten Durchflußmenge $Q_{Grenz}$ entspricht, dann wird die vom Stellmotor 12 angetriebene Drosselarmatur 2 und aufgrund des von der Auswerteeinheit 16 gelieferten Signals in den aktiven Drosselbetrieb übergehen. Die während des aktiven Drosselbetriebes zu realisierende Kennlinie kann frei parametriert werden. Dies erfolgt nach der Gleichung

$$H_{V, Ventil} = A + B \cdot Q^{EXP}.$$

Der Druckverlust des Ventils $H_{V, Ventil}$ basiert auf zwei Konstanten A, B und der Durchflußmenge, wobei der Exponent im Bereich 0,1 bis 3 liegen kann.

Das Ende der Kennlinie wird durch einen zweiten Kennlinienpunkt P2 definiert, welcher der maximalen Fördermenge der jeweiligen Pumpe entspricht: $Q_2 = Q_{max, Pumpe}$. Der Druckhöhenverlust des Ventils entspricht dann dem erforderlichen Druckhöhenverlust: $H_{V, Ventil} = H_{V,erforderlich}$. Aufgrund einer üblichen Arbeitspunktauslegung bei einem Parallelbetrieb von Pumpen in einem Energieversorgungssystem, wonach

$$\frac{Q_{Nenn,Anlage}}{N} < \frac{Q_{max,Pumpe}}{1}$$

mit N = Anzahl der parallel betriebenen Pumpen ist sichergestellt, daß eine einzelne Pumpe durch die im zugehörigen Rohrleitungsstrang angeordnete Drosselarmatur 2 immer nur vorübergehend gedrosselt wird. Im jeweiligen Normalbetrieb bis zur Nennfördermenge sind die Drosselarmaturen 2 vollständig geöffnet und gewährleisten dadurch einen verlustarmen Betrieb des Transportsystems. Durch die dynamische Durchflußmengenbegrenzung mittels Drosseln ist der Einsatz von Umwälzpumpen möglich, deren Leistungsdaten gegenüber den bisherigen Auslegungsarten knapper dimensioniert sind. Ebenso kann für eine Pumpenregelanlage im Teillastbetrieb eine Reduzierung der Förderhöhe vorgenommen werden, wodurch wiederum eine Energieeinsparung möglich wird. Der zwischen den Punkten P1 und P2 zeitweilig gegebene Kennlinienverlauf ist als $PKL_{Grenz}$ bezeichnet. Dieses Verhalten gilt entsprechend für den gleichzeitigen Betrieb beider Pumpen gemäß Fig. 6.

Die Darstellung in der Fig. 8 entspricht vom Aufbau her der Darstellung in Fig. 5. In den Verbrauchersträngen, d. h. in Durchströmrichtung des Transportsystems vom Verteiler VT zum Sammler SA, sind zusätzlich vorlaufseitig weitere Drosselarmaturen 2 mit Volumenstrommeßeinrichtung 3 und motorischem Stellantrieb integriert. Die Stränge 7 und 8 sind jeweils zwischen Vor- und Rücklauf durch temperaturgesteuerte Mischventile 4 verbunden. Beim Anfahrbetrieb eines solchen Energieversorgungssystems, z. B. in Form einer Heizungsanlage, findet zuerst ein Anstieg der Vorlauftemperatur im Vorlauf statt. Da einem Anfahrbetrieb üblicherweise eine Auskühlung der Verbraucher V1 bis V2 vorausgegangen ist, tritt auf Seiten der einzelnen Verbraucher ein hoher Massenstrom oder Durchfluß auf. Um für einen solchen Betriebszustand Überlastungen der Pumpe 1 zu verhindern, werden die Drosselarmaturen 2 in ihrer Auswerteeinheit 16 so eingestellt, daß sie für den jeweiligen Strang 7, 8 zwischen einer individuell einstellbaren minimalen und maximalen Vorlauftemperatur aktiv drosseln. Dies verhindert, daß die im Erzeugerkreislauf angeordnete Pumpe 1 das energiereiche Fluid im Anfahrbetrieb mit Überlast fördert. Auch wird mit Hilfe der während des Anfahrbetriebes erfolgenden Drosselung in den jeweiligen Nebensträngen der verbraucherseitigen Verteilerkreisläufe eine anlagengemäß günstige Aufteilung des energiereichen Fluids auf die einzelnen Verbraucher V1, V2 gewährleistet.

Für besonders kritische Energieversorgungssysteme, z. B. Blockheizkraftwerke, kann eine zusätzliche zeitliche Verzögerung vorgesehen werden. Eine solche Zusatzfunktion dient der Anpassung an die betriebsbedingten Anregelzeiten eines Erzeugers, z. B. eines Kessels und ist der Auswerteeinheit 16 der Drosselarmatur 2 integriert.

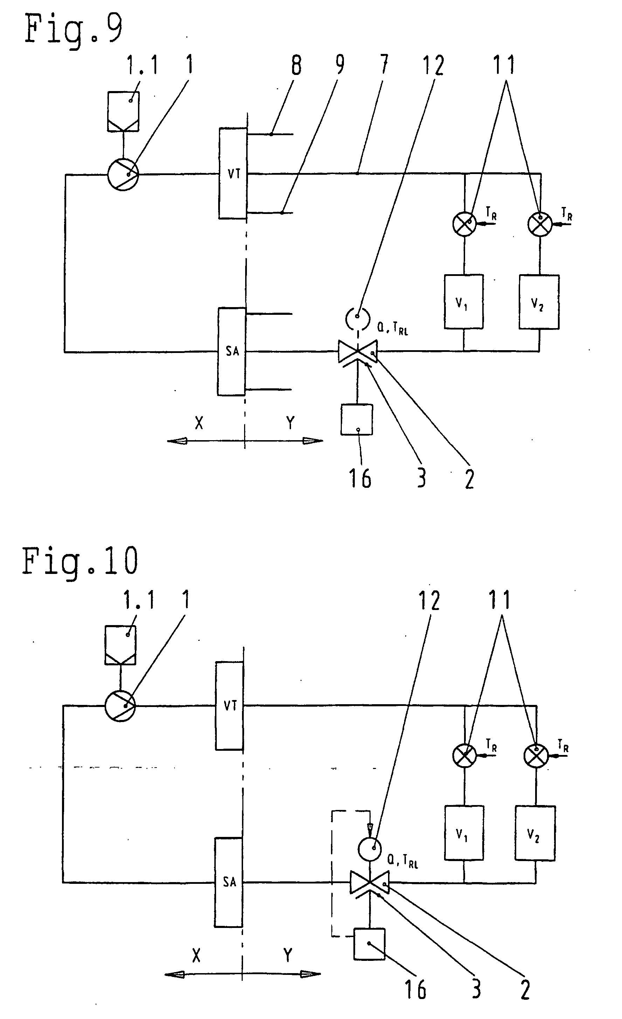

Die Fig. 9 zeigt ein Transportsystem, bei dem im Rücklauf eines Verbraucherkreislaufes eine Drosselarmatur 2 mit elektronischer Volumenstrommeßeinheit 3 und Auswerteeinheit 16 eingebaut ist. Weiterhin weist diese Armatur 2 zusätzlich einen Temperatursensor TRL zur Erfassung der Rücklauftemperatur vor dem Sammler SA auf. Diese Armatur 2 hat hier die Funktion einer Strangregulierarmatur, mit deren Hilfe für den Vollastbetrieb eine gleichmäßige Versorgung der Verbraucher V1 bis V2 gewährleistet wird. Zusätzlich mißt diese Armatur 2 permanent den vorhandenen Istdurchfluß und registriert die Rücklauftemperatur TRL des Fluids. Die Armatur selbst bleibt in dem beim Strangabgleich eingestellten, teilgedrosselten Zustand. Sie entspricht damit einem Zustand, wie er beim üblichen statischen Strangabgleich erzeugt wird.

Die mit der Armatur 2 verbundene Auswerteeinheit 16 ermöglicht mittels der stetigen Durchfluß- und Temperaturmessung eine Kalkulation des hydraulischen Bedarfs im zugehörigen Rohrleitungsstrang. Mit Hilfe des berechneten Kalkulationsergebnisses liefert die Auswerteeinheit 16 ein Signal an eine Pumpenregeleinheit 1.1, welche die Drehzahl der Pumpe verändert. Da die für eine gesamte Anlage wichtigsten, möglicherweise alle Stränge, in gleicher Art reagieren, muß mit der Pumpenregeleinheit 1.1 nur noch sichergestellt werden, daß der von der Auswerteeinheit 16 der Drosselarmatur 2 gemeldete größte Bedarf gerade noch erreicht wird. Die hier nur angedeuteten weiteren Rohrleitungsstränge 8, 9 sind in gleicher Weise mit der Drosselarmatur 2 ausgerüstet und mit der Pumpenregelung 1.1 verbunden. Eine solche Regelcharakteristik einer Pumpe 1 stellt sicher, daß kein Strang unterversorgt wird, aber auch keine unnötige Überversorgung mit ihren nachteiligen Auswirkungen auftritt. Die Kalkulation des für den Strang notwendigen Bedarfes kann zweckmäßigerweise mit einer Fuzzy-Regelung erfolgen. Dazu werden zwischen den Extremwerten einer großen Durchflußmenge und einer hohen Rücklauftemperatur sowie einer kleinen Durchflußmenge im Strang mit tiefer Rücklauftemperatur verschiedene Zwischenwerte festgelegt, mit deren Hilfe unter Berücksichtigung eines zeitlichen Verlaufes eine Tendenzbewertung möglich wird. Damit ist es der Auswerteeinheit möglich, dem Pumpenregler ein Signal zu senden, aufgrund dessen im Regler entschieden wird, ob die von der Pumpe gelieferte momentane Förderhöhe gehalten, erhöht oder verringert werden soll. Dies entspricht in etwa einem Dreipunktverhalten eines Reglers.

Die mit der Pumpenregelung verbundene Armatur, die im Rücklauf des Transportsystems angeordnet ist, ermittelt über die gemessene Rücklauftemperatur $T_R$ grob den Belastungszustand der vorgelagerten Verbraucher. Dies erfolgt anhand der Annahme, daß bei einer niedrigen Rücklauftemperatur bei den Verbrauchern auch eine entsprechend niedrige Last anliegt. In Verbindung mit dem von der Armatur gemessenen Durchfluß $Q_{ist}$ und unter Bewertung der zeitlichen Änderung des Durchflusses und auch der Temperatur TR kann ein Trend ermittelt werden, der es erlaubt, den Belastungszustand des Transportsystemes ausreichend genau zu kalkulieren. Dies hat den Vorteil, daß die Pumpe immer nur die notwendige hydraulische Leistung liefert, die für einen problemlosen Betrieb der nachgeordneten Verbraucher notwendig ist.

In einem besonderen Betriebszustand, bei dem im Transportsystem eine sehr geringe Last mit hohen Pumpendruck besteht, kann eine Überversorgung derjenigen Stränge erfolgen, die nahe der Pumpe angeordnet sind. Um dies zu vermeiden, wird die Drosselarmatur 2 mit einem zusätzlich gestrichelt dargestellten eigenständigen Antrieb 12 ausgerüstet. Die Auswerteeinheit 16 der Drosselarmatur 2 errechnet den notwendigen Solldurchfluß und veranlaßt bei dessen Überschreitung einen Stelleingriff mit Hilfe des Antriebes 12. Die Drosselarmatur 2 wird somit teilweise geschlossen, wodurch ein Eindrosseln stattfindet, welches die Überschreitung des Solldurchflusses verhindert bzw. korrigiert.

In Fig. 10 ist ein Regelschema gezeigt, bei dem eine Pumpe 1 mit förderstromabhängiger Sollwertkorrektur eingesetzt ist. Die verbraucherseitig im Rücklauf vor dem Sammler SA angeordnete Armatur 2 wirkt als autarke Durchflußregeleinrichtung. Die Messung des Volumenstroms Q und der Rücklauftemperatur TRL wird in der Auswerteeinheit in ein Regelsignal umgewandelt, welches ein Stellsignal an den Motor des Drosselorgans der Armatur liefert. Somit wird nur bei einem Überschreiten des Solldurchflusses eine Eindrosselung des Rücklaufes vorgenommen. Die förderstromabhängig regelte Pumpe registriert die Änderung des hydraulischen Widerstandes und kann mit ausreichender Genauigkeit die für das Transportsystem notwendige Förderhöhe zur Verfügung stellen.

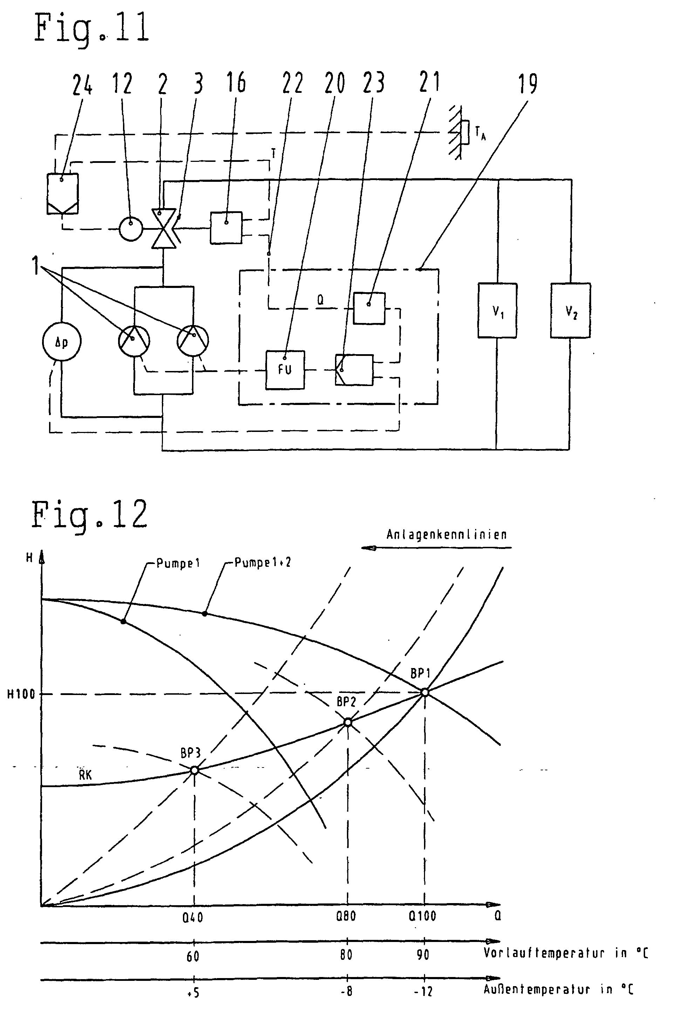

In der Figur 11 ist ein Kreislauf eines Transportsystemes gezeigt, bei dem 2 parallel betriebene Pumpen in ihrer Drehzahl durch einen Frequenzenformer 22 veränderbar sind. Mit Hilfe einer Differenzdruckerfassung ΔP werden die Druckverhältnisse vor und hinter den Pumpen 1 erfaßt und einem Pumpenregelsystem 19 mit Regler 23 zugeführt. Entsprechend den dort hinterlegten Regelanforderungen wird die Drehzahl der Pumpe bedarfsgerecht verändert. Im sogenannten Vorlauf des Transportssystemes, d.h. auf der Druckseite der Pumpen, ist eine Drosselarmatur 2 mit Volumenstromerfassung 3 und Stellantrieb 12 gezeigt. Die Auswerteeinheit 16 liefert ein Volumenstromsignal Q über eine Signalleitung 20 an einen Sollwertgenerator 21. Dieser erzeugt anhand einer abgelegten Kennlinie einen Sollwert für das ΔP in Abhängigkeit vom Volumenstrom als Führungsgröße für den Regler 23 im Pumpenregelsystem 19. Weiterhin registriert die Drosselarmatur 2 gleichzeitig die Vorlauftemperatur und führt sie einer Regeleinheit 24 zu. Als Alternative ist es möglich, die Außentemperatur $T_A$ zu erfassen und ebenfalls der Regeleinheit 24 der Drosselarmatur 2 einzuspeisen. Der in dem Transportsystem für die Verbraucher V1, V2 erforderliche Volumenstrom wird somit bedarfsgerecht in Abhängigkeit von der Vorlauftemperatur T und/oder einer Außentemperatur $T_A$ bestimmt. Durch die Verwendung des kostengünstigen Volumenstromgebers in Form einer Drosselarmatur ist eine solche Einrichtung auch wirtschaftlich konkurrenzfähig.

Die Figur 12 zeigt die mögliche Veränderung der Anlagenkennlinien in einem System gemäß Figur 11.

Die Figur 12 zeigt die Funktionsweise des Pumpenregelsystems mit einer bekannten, von Förderstrom abhängigen Regelkennlinie RK. Hierbei reagiert das Pumpenregelsystem lediglich auf die Veränderungen der Anlagenkennlinien, welche durch das Drosselverhalten der Verbraucher V1 und V2 und dem Drosselzustand der Drosselarmatur 2 bewirkt werden.

Im Neun-Betriebs-Punkt BP1 sind beide Verbraucher sowie die Drosselarmatur voll geöffnet. Dieser Zustand ist normalerweise im Vollastfall bei niedrigster Außentemperatur mit hoher Vorlauftemperatur gegeben.

Bei reduzierter Vorlauftemperatur (z. B. Nachtabsenkung) verlangen die Verbraucher V1, V2 einen größeren Volumenstrom, um ihren Leistungsbedarf zu befriedigen. Dieser hohe Volumenstrom ist aber unerwünscht.

Die Drosselarmatur 2 mit Vorlauftemperaturmessung und Volumenstrommessung, Auswerteeinheit 16 sowie Regeleinrichtung ermittelt nun über die Messung der Vorlauftemperatur alternativ die Außentemperatur des Absenkzustandes bzw. Teillastzustandes. Sie drosselt nunmehr zusätzlich den Volumenstrom hinter den Pumpen ein, so daß bei einer Vorlauftemperatur von z. B. 80° C der Betriebspunkt BP2 erzwungen wird. Füllt die Vorlauftemperatur weiter auf 60° C ab, wird durch zusätzliches Drosseln der Armatur 2 schließlich der Betriebspunkt BP3 erzwungen.

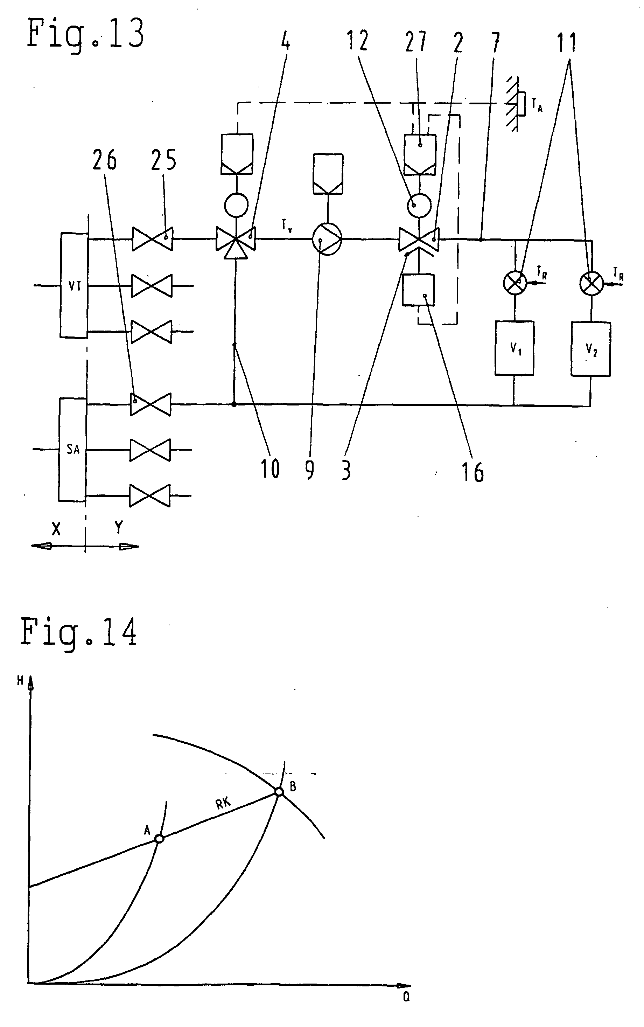

Das Ausführungsbeispiel der Figur 13 zeigt einen Verteilerkreislauf Y eines Transportsystemes in Form einer Warmwasserheizanlage. In dieser Figur 13 wurde auf die vollständige Darstellung des Erzeugerkreislaufes verzichtet. Die Pumpe 9 im Strang 7 entnimmt dem Verteiler VT das Fluid und gibt es über die Verbraucher V1, V2 an einen Sammler SA zurück. Hier ist das eigenständige Regelverhalten in einem Verteilerkreislauf eines größeren Energieverteilungssystemes mit einer Vielzahl von Nebensträngen gezeigt, die aus Gründen einer besseren Übersichtlichkeit nicht dargestellt, sondern nur angedeutet werden. Bei diesem Ausführungsbeispiel erfolgt die Anpassung der Wärmeleistung durch Regelung der Vorlauftemperatur mittels Beimischung von im allgemeinen kühleren Fluid aus dem Rücklauf. Die Vorlauftemperatur wird dabei in Abhängigkeit von der Außentemperatur $T_A$ geregelt. Innerhalb dieses Stranges 7 übernimmt eine Pumpe 9 die Verteilung des Fluids zu den einzelnen Verbrauchern V1, V2. Eine solche Lösung mit separaten Umwälzpumpen 9 in Nebensträngen 7 findet häufig bei großen Heizungsanlagen Verwendung. Sie bestehen in der Regel aus vielen parallel angeordneten Strängen, die jeweils einzelne Gebäudeteile versorgen.

In der Vorlaufleitung des Nebenstranges 7 ist ein Absperrventil 25 zwecks Absperrung des gesamten Stranges angeordnet, wobei ein entsprechendes Absperrventil 26 auch in der Rücklaufleitung befindlich ist. In der Vorlaufleitung ist vor der Pumpe ein 3-Wege-Mischventil 4 eingebaut, welches in Abhängigkeit von der Außentemperatur $T_A$ eine Beimischung kälteren Rücklauffluids durch die Leitung 10 in die Vorlaufleitung gewährleistet. Dem Mischventil 4 ist eine Pumpe 9 nachgeordnet und auf der Druckseite der Pumpe 9 ist in der Vorlaufleitung eine Drosselarmatur 2 mit einem elektronischen Volumenstromsensor 3 angeordnet. Vorzugsweise ist der Sensor in die Drosselarmatur 2 integriert. Eine motorische Stelleinrichtung 12 für die Drosselarmatur 2 hat sich als vorteilhaft erwiesen. Die Verbraucher V1, V2 mit zugehörigen Thermostatventilen 11 sorgen für eine Energieabgabe am Ort der Verbraucher V1, V2. Das Fluid strömt dann von den Verbrauchern V1, V2 durch die Rücklaufleitung zurück zu dem Sammler SA. Das Drosselventil 2 mit dem Volumenstromsensor 3 kann ebenso gut auch in der Rücklaufleitung angeordnet sein. Bei der Verwendung von Sensoren, die zur Volumenstrommessung auf eine notwendige Einlaufstrecke angewiesen sind, wäre dies ein günstigerer Ort.

Der Energiebedarf der Verbraucher ist primär von der Außentemperatur $T_A$ abhängig, weshalb die Außentemperatur $T_A$ zur Regelung der Vorlauftemperatur $T_V$ in der Vorlaufleitung herangezogen wird. Das 3-Wege-Mischventil 4 mischt Rücklaufwasser aus der Rücklaufleitung über den Bypass 10 und Vorlauffluid aus dem Vorlauf solange, bis die der jeweils vorherrschenden Außentemperatur $T_A$ anlagenseitig zugeordnete Vorlauftemperatur $T_V$ erreicht ist. Die Energieaufnahme der Verbraucher V1, V2 an die zu beheizenden Orte ist praktisch ausschließlich abhängig von der Temperaturdifferenz zwischen Verbraucher und Umgebungsluft sowie dem Wärmeübergang auf die Luftseite. Die durch die Verbraucher V1, V2 fließende Fluidmenge hat bei den üblicherweise eingesetzten Heizkörpern nur einen vernachlässigbaren Einfluß. Das in dem System zirkulierende Fluid hat primär die Aufgabe zum Transport der benötigten Energie, im vorliegenden Fall als der benötigten Wärmemenge. Diese ist proportional dem Produkt aus Fluidmenge und Fluidabkühlung. Diese wärmetechnische Gesetzmäßigkeit erlaubt es, parallel zu einer Regelung der Vorlauftemperatur TV auch eine Regelung der umgewälzten Fördermenge vorzunehmen, unter Beibehaltung der gewünschten Regelgüte. Ein geringer Einfluß einer Fördermengenreduzierung auf die Wärmeleistung eines Verbrauchers kann durch eine geringfügige Korrektur der Abhängigkeit der Vorlauftemperatur TV von der Außentemperatur $T_A$, auch bekannt als Heizkennlinie $T_V = f(T_A)$, oder auch durch die an den Verbrauchern angeordneten Thermostatventilen 11 selbst kompensiert werden. Dies ermöglicht, bei bestehenden Anlagen durch Austausch einer Absperrarmatur und deren Ersatz durch eine Drosselarmatur mit Volumenstrommessung die Energieeinsparung auch bei Altanlagen zu realisieren.

Die Reduzierung der von der Pumpe umzuwälzenden Fördermenge führt zu einer etwa proportionalen Energieeinsparung. Im nur selten auftretenden sogenannten Vollastfall wird auch die bei heutigen Anlagen notwendige gleiche Fördermenge umgewälzt. Mit steigender Außentemperatur erfolgt eine Reduzierung der Fördermenge nach einer einstellbaren Fördermengenkennlinie in Abhängigkeit von der Außen- oder Vorlauftemperatur. Damit ergibt sich eine Reduzierung der Fördermenge, die im extremen Teillastbereich bis zu etwa 60 - 80 % beträgt. Eine solche Mengenreduzierung stellt kein Problem für die Stabilität der Anlage dar, da auch bei den heutigen Anlagen diese Betriebszustände kurzzeitig auftreten, z.B. bei extremer Sonneneinstrahlung in zu beheizende Räume oder beim Abstellen von Thermostatventilen in mehreren Räumen. Die in Figur 13 gezeigte, für den jeweilen Strang Verwendung findende eigenständige Regelelektronik 27, ermöglicht im jeweiligen Strang die Energieeinsparung.

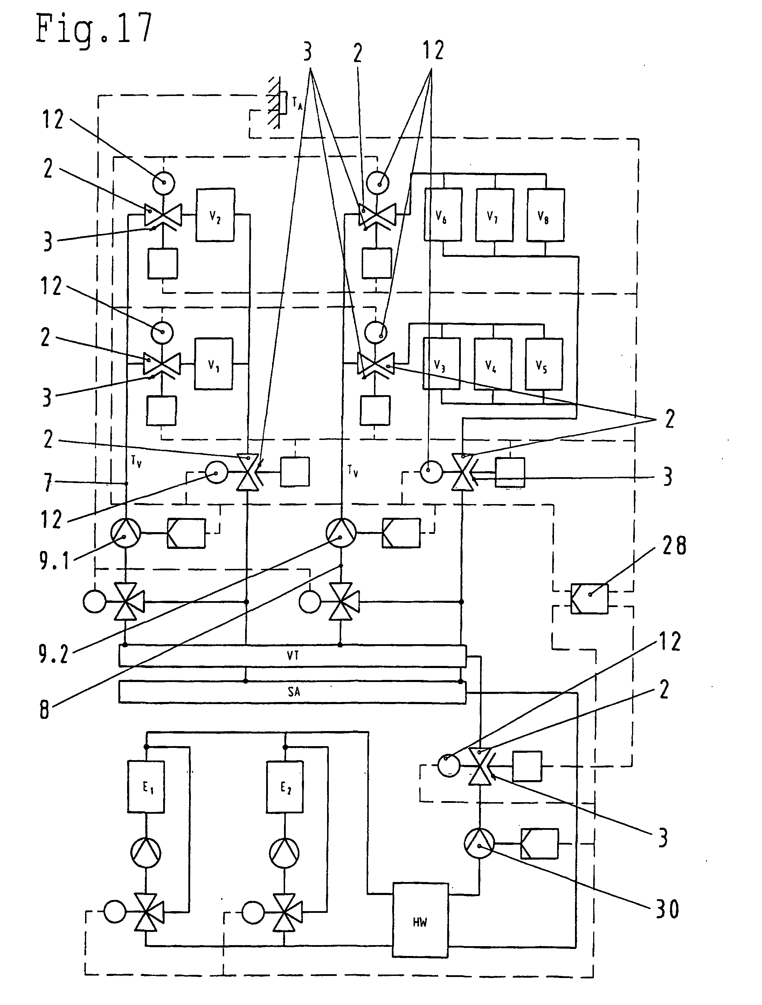

Verwendet man eine gemeinsame Regelelektronik 28 für ein aus mehreren Strängen bestehendes gesamtes Transportsystem (vergl. Fig. 17), so kann die Abhängigkeit der sogenannten Heizkennlinie von der Fördermengenkennlinie in der gemeinsamen Regelelektronik berücksichtigt werden. Da Warmwasserheizungsanlagen während einer Heizperiode überwiegend im Teillastbereich laufen, sind Einsparungen in der Größenordnung von 30 - 50 % der Pumpenantriebsenergie möglich.

Die Figur 14 zeigt dies anhand der Regelkennlinien RK für eine Drehzahl geregelte Pumpe. Bei einem herkömmlichen Transportsystem mit konstanter Fördermenge liegt während der gesamten Betriebszeit der Betriebspunkt bei B, dem Auslegungspunkt der maximalen Fördermenge. Bei einem erfindungsgemäßen Transportsystem mit variabler Fördermenge liegt aufgrund der mittleren jährlichen Außentemperatur die Fördermenge im Betriebspunkt A. Hierbei sind Einflüsse durch Thermostatventile bzw. Nacht- und Wochenendabsenkung nicht berücksichtigt.

Ähnliche Verhältnisse ergeben sich bei drehzahlgeregelten Pumpen mit Regelkennlinien, die eine zusätzliche Abhängigkeit von der Außen- bzw. Vorlauftemperatur aufweisen.

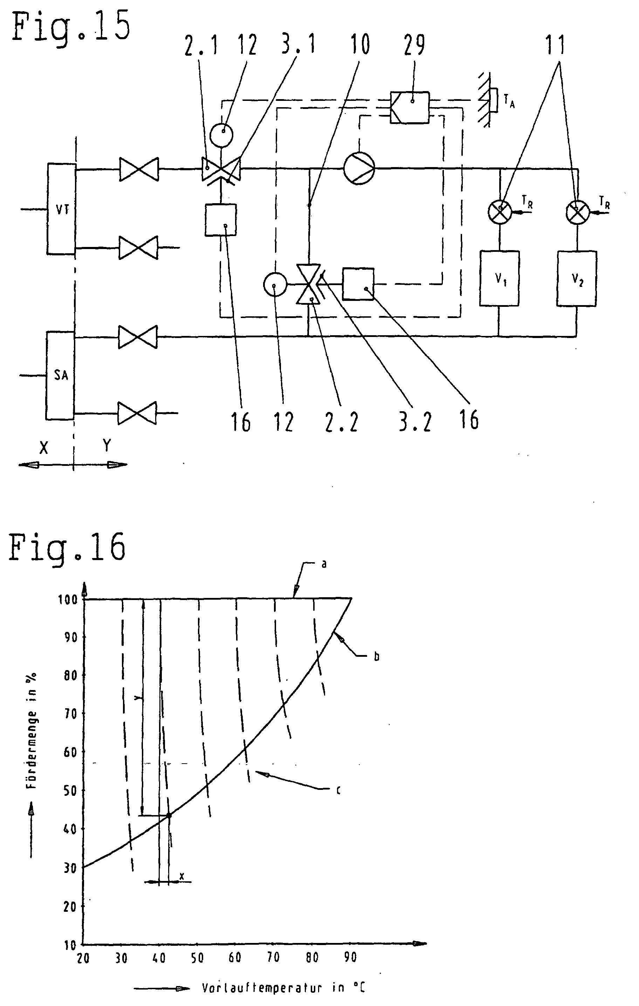

Bei der Darstellung in Figur 15 wurde im Unterschied zu Figur 13 deren Mischventil 4 durch zwei Drosselarmaturen 2.1, 2.2 mit Stellantrieb 12 ersetzt. Die Drosselarmatur 2.1 ist in der Vorlaufleitung vor der Einmündung einer Beimischleitung 10 angeordnet, wobei die Beimischleitung 10 eine zweite Drosselaramtur 2.2 aufweist. Eine solche Anordnung ist kostengünstiger als die in Figur 13 gezeigte Kombination aus 3-Wege-Mischventil 4 und einer Drosselarmatur 2. Die Funktionalität der hier verwendeten beiden Drosselarmaturen 2.1, 2.2 ist analog der Funktionalität der Ausführungsform in Figur 13.

Eine elektronische Auswerteeinheit 29 koordiniert in diesem Ausführungsbeispiel das Zusammenwirken der einzelnen Teile, wobei die Information über den Volumenstrom von den beiden Drosselarmaturen über den integrierten Volumenstromsensor 3.1, 3.2 geliefert werden.

Die Drosselarmatur 2.2 kann bei einer einfachen Ausführungsform bei gleicher Funktionalität auch durch ein federbelastetes Überströmventil ersetzt werden, wodurch eine weitere Kostenreduzierung erreicht wird.

Ebenso ist es möglich, anstelle des federbelasteten Überströmventils einen Rückflußverhinderer einzubauen, dessen Durchflußrichtung eine Beimischfunktion gewährleistet. Dieser Rückflußverhinderer kann mit oder ohne federbelastetem Verschlußelement ausgestaltet sein. Zum Abgleich der Mengenströme Q1, Q2, die am Eimmündungsort der Bypassleitung 10 zusammentreffen, dient eine Kombination einer einstellbaren Drosselarmatur mit einem Überströmventil oder mit einem Rückflußverhinderer.

In der Figur 16 ist ein Diagramm einer Heizungsanlage gezeigt, die für eine Vorlauftemperatur von 90 ° Celsius, eine Rücklauftemperatur von 70 ° Celsius und einer zu erreichenden Raumtemperatur von 20 ° Celsius ausgelegt wurde. Wird eine solche Anlage in herkömmlicher Weise mit einer konstanten Fördermenge betrieben, so entspricht dies der horizontalen Fördermengenkennlinie a. Erfolgt dagegen eine Reduzierung der Fördermenge im Wärmeteillastbereich, dann erhält man erfindungsgemäße Fördermengenkennlinien, wie z.B. die gezeigte Fördermengenkennlinie b. Aus dem Diagramm ist ablesbar, daß bei einer nur wenige Grade betragenden Erhöhung der Vorlauftemperaturen um den Wert x, eine erhebliche Reduzierung der Fördermenge um den Betrag y eintritt. Die gestrichelt eingezeichneten Kurven c sind Kurven gleicher Wärmeleistung der Heizkörper bzw. der Verbraucher.

Die Figur 17 zeigt ein Transportsystem, welches aus mehreren miteinander hydraulisch gekoppelten, aber beispielhaft mit nur zwei dargestellten Strängen 7, 8 besteht. Es wird ein Beispiel einer Großheizungsanlage beschrieben, bei der ab einer bestimmten Größenordnung die Wärmeleistung auf mehrere Erzeuger E1, E2 aufgeteilt ist. Bei den Erzeugern handelt es sich um mehrere parallel geschaltete Kessel, die unter Zwischenschaltung einer hydraulischen Weiche HW mit einem Zwischenkreislauf verbunden sind. Der Zwischenkreislauf hat die Aufgabe, das vom Erzeugerkreislauf gelieferte energiereiche Fluid auf mehrere Verbraucherkreisläufe 7, 8 zu verteilen. Zu diesem Zweck fördert eine im Zwischenkreislauf angeordnete Pumpe 30 das Fluid in einen Vorlaufverteiler VT, von dem aus die Vorlaufleitungen der verschiedenen - im Ausführungsbeispiel sind aus Platzgründen nur 2 gezeigt - Stränge versorgt werden. Aus den Strängen strömt das energiearme Fluid einem gemeinsamen Rücklaufsammler SA des Zwischenkreislaufes zu, von wo aus es zu der hydraulischen Weiche HW zurückströmt.

Bei den bisher bekannten Transportsystemen dieser Art erfolgt nur im Erzeugerkreislauf eine gezielte Anpaßung eines Mengenstromes bzw. der Wärmeleistung durch Zu- und Abschaltung von einzelnen Erzeugern, auch als Kesselfolgeschaltung bekannt. Im Teillastbetrieb eines solchen hydraulischen Gesamtsystems wird bisher in nachteiliger Weise ein zu großer Mengenstrom umgewälzt, da selbst beim Abschalten von einzelnen Verbrauchern in den Verbraucherkreisläufen der Mengenstrom im Zwischenkreislauf unverändert bleibt. Zusätzlich wirkt sich die Trägheit dieses hydraulischen Gesamtsystem nachteilig aus. Veränderungen der Mengenströme bzw. der Wärmeleistungen der Verbraucher werden nur mit erheblicher Verzögerung in Form einer Temperaturveränderung an den Erzeugerkreislauf weitergegeben. In gleicher Weise verzögert sich ein Anfahren oder Abfahren von notwendigen Erzeugern, so daß es entweder zu einer Unterversorgung oder zu Wärmeverlusten durch nicht rechtzeitig abgeschaltete Kessel kommt. Bei plötzlichen Zunahmen des Energiebedarfs auf Seiten der Verbraucher in den Verbrauchersträngen kann ungünstigenfalls zu kaltes Fluid aus dem Rücklauf bis in die Erzeuger gelangen und dort zu Schäden führen.

Solches wird verhindert, indem in den einzelnen Strängen oder Kreisläufen Drosselarmaturen 2 mit Einrichtungen 3 zur elektronischen Volumenstromerfassung angeordnet sind. Diese Armaturen sind mit einer zentralen Reglereinheit 28 verbunden, in welche sie die permanent gemessenen Volumenströme einspeisen. Der Regler 28 wiederum liefert Stellsignale an die Stellmotoren 12 der Drosselarmaturen 2, um im Bedarfsfall im jeweiligen Verbraucherstrang oder im Zwischenkreislauf eine temporäre, an die benötigte Energiemenge bzw. Wärmeleistung angepaßte Drosselung in Abhängigkeit von der Vorlauf- $T_V$ oder Außentemperatur $T_A$ vorzunehmen. Gleichzeitig erfolgt im Zwischenkreislauf eine Mengenpassung an die Gesamtmenge der Verbraucherstränge. Durch zusätzliche Erfassung der Temperatur am Ort der Mengenmessung ist ein direktes energiesparendes Optimieren der umgewälzten Wärmemenge möglich. Plötzliche Bedarfsänderungen der Energie bei den Verbrauchern in den jeweiligen Strängen können durch direkte Weiterleitung dieser Informationen an die Regeleinheit 28 unmittelbar und ohne Verzögerung zur Regelung der Erzeuger E1, E2 im Erzeugerkreislauf herangezogen werden. Damit ist eine Reduzierung der Verluste der Heizkessel möglich, bei gleichzeitiger Verbesserung der Versorgung der in das hydraulische System integrierten Verbraucher V1-V8.

Auch lassen sich damit bei plötzlichen und extremen Schwankungen des Energiebedarfes im Bereich der Verbraucher V1-V8 sofort und ohne Verzögerung durch entsprechende Regeleingriffe im Zwischen- und Erzeugerkreislauf Schäden an den Erzeugern E1, E2 vermeiden.

Im Verbraucherstrang 7 ist gezeigt, daß größere Verbraucher direkt mit den Volumenstrom erfassenden Drosselarmaturen 2 ausgerüstet sind. Dies ermöglicht es, den Wärmebedarf solcher wichtiger Verbraucher unmittelbar zur Regelung der Mengenströme des gesamten hydraulischen Systems heranzuziehen.

Der Verbraucherstrang 8 zeigt eine Ausführungsform, bei der eine einzelne Strangpumpe 9.2 mehrere Stränge versorgt. Die darin integrierten Drosselarmaturen 2 mit Stellantrieb 12 und elektronischer Messung des Durchflusses können durch ihre Verbindung mit der Regeleinheit 28 die Stabilität des verbrauchereigenen Regelsystems, z.B. deren thermostatische Heizkörperventile, verbessern. In Abhängigkeit von der durch die Drosselarmatur 2 gemessenen Durchflußmenge kann bei einem zu großen Druckabfall über den Verbrauchern ein Teil des unerwünschten Differenzdruckes durch Veränderung des Drosselorganes in der Armatur abgebaut werden. Weiterhin kann die Armatur zum automatischen Abschalten von Verbrauchern bzw. Nebensträngen verwendet werden, wenn die Gegebenheiten am Ort der Verbraucher dies erfordern. Somit wird die notwendige Energie zum Durchströmen dieser Systeme und die damit verbundenen Wärmeverluste vermieden.

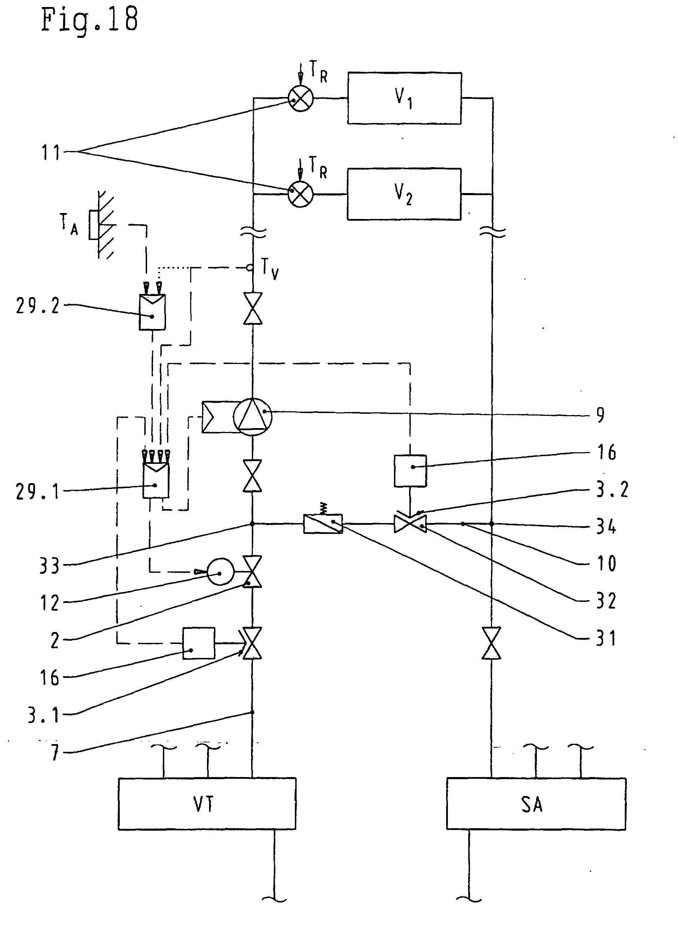

Die Figur 18 zeigt einen Verbraucherkreislauf 7 der als Nebenstrang eines hydraulischen Transportsystems ausgebildet ist. Dieser Nebenstrang wird von einem Verteiler VT gespeist und mündet in einem Sammler SA. Das Regelsystem besteht aus einer Drosselarmatur 2 und einer geregelten Pumpe 9 Verbrauchern V1, V2 mit den Verbrauchern direkt zugeordneten Thermostatventilen 11. Eine Volumenstrommeßeinheit 3.1 ist nach dem Verteiler VT und vor der Pumpe 9 angeordnet. Zwischen der Drosselarmatur 2 und der geregelten Pumpe 9 mündet in den Vorlauf des Verbraucherstranges 7 eine Bypassleitung 10 im Einmündungsort 33 ein. Der Bypass 10 verbindet den von den Verbrauchern V1, V2 wegführenden Teil des Stranges 7, den Rücklauf, mit dem hier die Pumpe 9 enthaltenden Vorlauf.

Im Bypass 10 ist eine weitere Volumenstrommeßeinheit 3.2 angeordnet sowie eine Armatur31, die als handbetätigte Drosselarmatur, als ein - wie dargestellt - federbelastetes Rückschlagventil oder als eine Überströmarmatur ausgebildet sein kann. Die Volumenstrommeßeinheit 3.1 mißt einen Volumenstrom Q1 und die Volumenstrommeßeinheit 3.2 einen Volumenstrom Q2. Die Addition von Q1 und Q2 ergibt den von der Pumpe 9 umzuwälzenden Gesamtvolumenstrom Q. Die von den Volumenstrommeßeinheiten 3.1, 3.2 erfaßte Volumenströme werden als elektronische Meßsignale einem Regler 29.1zugeführt, in dem auch ein Sollwert der Vorlauftemperatur sowie die Ist-Temperatur Tv der Vorlaufleitung eingespeist wird. Entsprechend dem gewünschten Regelverhalten, welches in dem Regler 29.2 mittels bekannter Maßnahmen abgelegt ist, liefert der Regler 29.1 die entsprechenden Stellsignale an die Drosselarmatur 2 und an die drehzahlregelbare Pumpe 9. Die weiterhin eingezeichneten, aber nicht nummerierten Armaturensymbole dienen zur Absperrung des Stranges 7 bzw. für eine Demontage der Pumpe 9.

Der hier als separates Teil eingezeichnte Regler 29.2 .... erfaßt Außentemperatur $T_A$ und alternativ zum Regler 29.1 eventuell auch den Istwert der Vorlauftemperatur. Der Regler 29.1 verarbeitet die von den Volumenstrommeßeinheiten 3.1 und 3.2 gelieferten Signale sowie die Vorlauftemperatur und regelt die Umwälzpumpe 9 und die Drosselarmatur entsprechend ein. Die beiden Regler 29.1 und 29.2 können auch zu einer gemeinsamen Baueinheit zusammengefaßt sein, vergleiche Fig. 15.

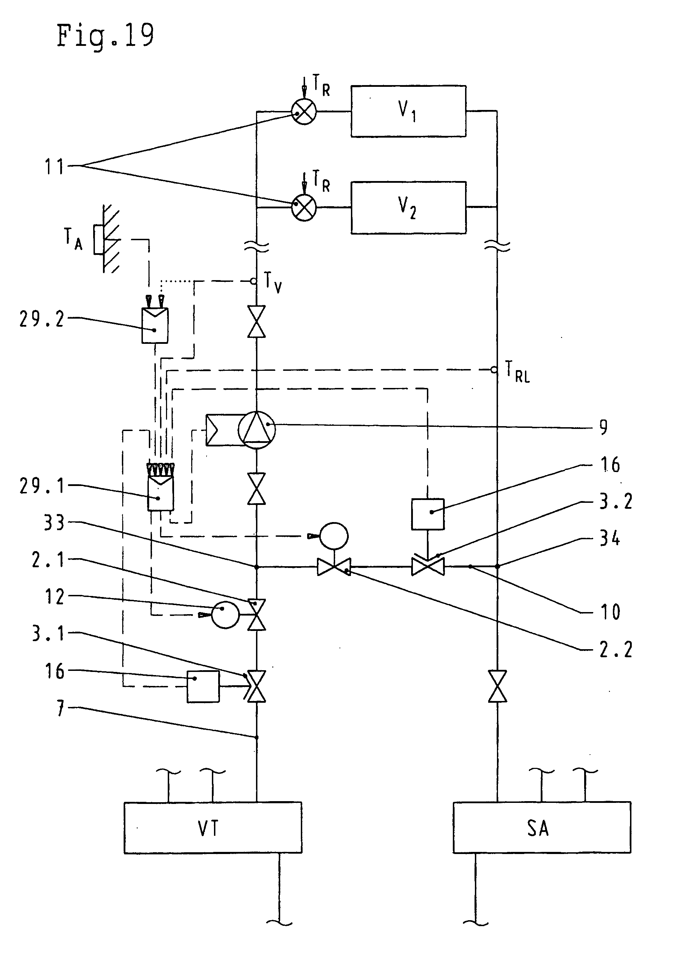

Das Ausführungsbeispiel der Fig. 19 unterscheidet sich gegenüber dem Ausführungsbeispiel der Fig. 18 durch die Anordnung von Drosselarmaturen 2.1 und 2.2. Die Drosselarmatur 2.2 ist dabei in der Bypassleitung 10 angeordnet. Somit kann durch den Regler 29.1 in Abhängigkeit von den Signalen, die die Volumenstrommeßeinheiten 3.1 und 3.2 liefern, mit Hilfe der Drosselarmaturen 2.1 und 2.2 der Volumenstrom Q1 und Q2 entsprechend den Bedürfnissen an den Verbrauchern V1 und V2 geregelt werden. Mit Hilfe der zwei Volumenstrommeßeinheiten 3.1, 3.2 werden die entsprechenden Teilströme in sehr genauer Weise erfaßt und ermöglichen somit eine sehr genaue Regelung.

Bei den Ausführungsbeispielen der Fig. 18 und 19 ist die Anordnung der Volumenstromeinheiten 3.1 und 3.2 nicht auf die Darstellung beschränkt. So wird bei einer anderen Anordnung der Volumenstrommeßeinheit 3.2, beispielsweise in dem als Rücklauf dienenden Teil des Stranges 7, ein anderer Volumenstrom erfaßt. Bei einer Anordnung nach dem Verbraucher V2 und vor dem Abzweigpunkt 34 der Bypassleitung 10 wird der gesamte Volumenstrom Q erfaßt, während bei einer Anordnung nach dem Abzweigpunkt 34 der Bypassleitung 10 und, vor dem Sammler SA ein um die Menge Q2 der Bypassleitung reduzierter Volumenstrom gemessen wird. Durch entsprechende Additions- oder Substraktionsvorgänge innerhalb des Reglers 29.1 kann somit der von der Pumpe 9 umzuwälzende Volumenstrom sowie die Teilvolumenströme Q1 Q2 exakt bestimmt werden.

Als Volumenstrommeßeinheit 3.1, 3.2 findet vorteilhafterweise eine Absperrarmatur mit Drosselfunktion und integrierten elektronischen Volumenstromsensor Verwendung. Für diesen Fall und der Anordnung in der Bypassleitung 10 kann auf die Verwendung einer zu Fig. 18 erwähnten zusätzlichen Drosselarmatur verzeichtet werden.

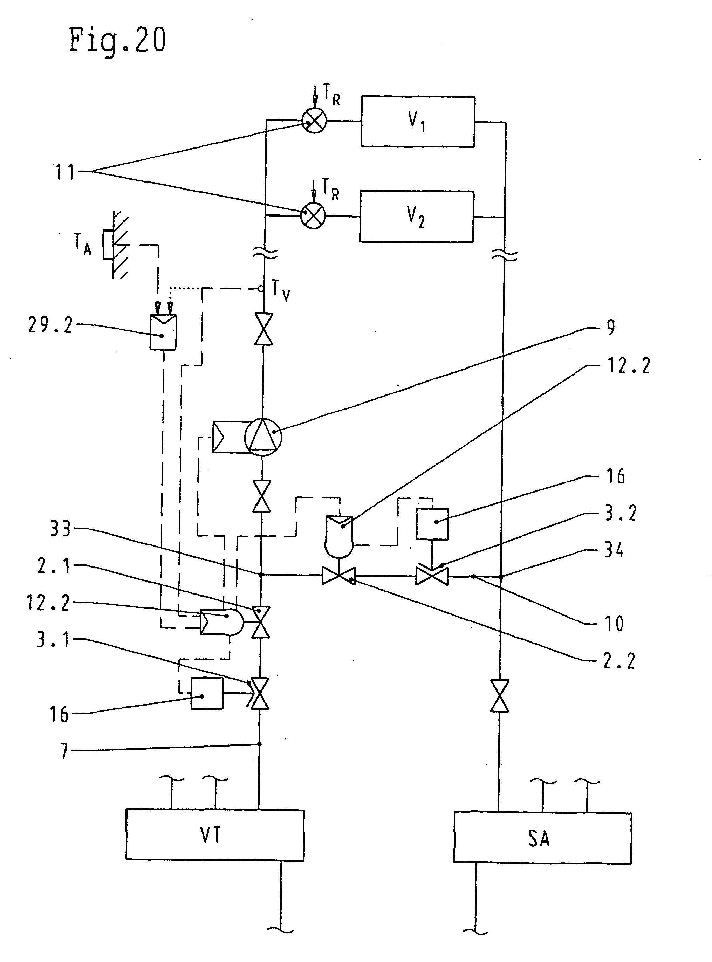

In der Fig. 20 ist ein Ausführungsbeispiel gezeigt, bei dem die Funktion des in den Fig. 18 und 19 dargestellten Reglers 29.1 in die Antriebe 12.2 der Drosselarmaturen 2.1 und 2.2 integriert ist. Entsprechend der von den Volumenstrommeßeinheiten 3.1 und 3.2 gelieferten Daten erfolgt eine Regelung der Drosselarmaturen 2.1, 2.2 und gegebenenfalls auch der Pumpe 9. Eine Integration von den in den anderen Ausführungsbeispielen gezeigten Regler kann auch dort in die jeweiligen Antriebe erfolgen. Auch ist es ohne weiteres möglich, die in den Ausführungsbeispielen dargestellten Regler in die Pumpenregelung 1.1 zu integrieren.

**Patentansprüche**

1. Transportsystem, mit einem flüssigen Fluid zur thermischen Energieübertragung, wobei mindestens eine Pumpe in einem hydraulischen System ein Fluid zwischen Erzeuger und Verbraucher unter Überwindung von Rohrnetzwiderständen zirkulierend umwälzt, die Verbraucher in dem hydraulischen System variable oder feste Widerstände darstellen und eine Einrichtung zur Beeinflussung der Wärmetransportleistung, insbesondere über eine Veränderung einer Vorlauftemperatur im hydraulischen System, angeordnet ist, **dadurch gekennzeichnet, daß** in einem Hauptstrang und/oder in mindestens einem Nebenstrang des hydraulischen Systems eine Drosselarmatur (2) mit elektronischer Volumenstrommeßeinheit (3) eingebaut ist, daß der gemessene Volumenstrom als Istwert in eine Steuereinrichtung, eine Regeleinrichtung (19, 24) oder eine Auswerteeinheit (16) einfließt, daß die Auswerteeinheit (16) eine Führungsgröße für die Regeleinrichtungen (23, 24) liefert und daß die Regeleinrichtung (23, 24) über eine Stelleinrichtung (12, 22) die Drehzahl der Pumpe (1, 9, 31) und/oder die Drosselstellung einer oder mehrerer Drosselarmaturen (2, 2.1, 2.2) verändert.

2. Transportsystem nach Anspruch 1, **dadurch gekennzeichnet, daß** die Drosselarmatur (2, 2.1, 2.2) und/oder die elektronische Volumenstrommeßeinheit (3) mit einem Temperatursensor versehen ist.

3. Transportsystem nach Anspruch 1 oder 2, **dadurch gekennzeichnet, daß** die Drosselarmatur (2, 2.1, 2.2) mit einem Stellantrieb (12) versehen ist.

4. Transportsystem nach Anspruch 3, **dadurch ge-** kennzeichnet, daß die elektronische Auswerteeinheit (16) der Drosselarmatur (2, 2.1, 2.2) mit einem die Temperatur innerhalb oder außerhalb des hydraulischen Systems erfassenden Temperatursensor verbunden ist.

5. Transportsystem nach Anspruch 4, **dadurch gekennzeichnet, daß** der Temperatursensor die Vorlauf- und/oder Rücklauftemperatur des hydraulischen Systems erfaßt.

6. Transportsystem nach einem der Ansprüche 1 bis 5, **dadurch gekennzeichnet, daß** eine oder mehrere Drosselarmaturen (2, 2.1, 2.2) mit integrierter elektronischer Volumenstrommeßeinheit (3) und Auswerteeinheit (16) in Erzeugerkreisläufen, Zwischenkreisläufen und/oder Verbraucherkreisläufen des Transportsystemes angeordnet sind.

7. Transportsystem nach einem der Ansprüche 1 bis 6, **dadurch gekennzeichnet, daß** die Drosselarmatur (2, 2.1, 2.2) den Pumpenförderstrom überwacht und bei gemessenen Abweichungen von einer vorgegebenen Regelkennlinie durch temporäres Verändern der Durchflußmenge den Arbeitspunkt der Pumpe (1) verschiebt.

8. Transportsystem nach einem der Ansprüche 1 bis 7, **dadurch gekennzeichnet, daß** die Drosselarmatur (2, 2.1, 2.2) den Volumenstrom eines Stranges (7, 8) erfaßt, daß bei Überschreitung von in die Auswerteeinheit (16) und/oder die Regeleinrichtung (24) vorgegebenen Volumenstromwerten ein Drosseln des momentanen Volumenstromes erfolgt.

9. Transportsystem nach einem der Ansprüche 1 bis 8, **dadurch gekennzeichnet, daß** in der elektronischen Auswerteeinheit (16) der Drosselarmatur (2, 2.1, 2.2) mehrere Kennlinienpunkte und/oder Kennlinienkurven zur Generierung einer Führungsgröße für die Regeleinrichtung (23) hinterlegt sind.

10. Transportsystem nach einem oder mehreren der Ansprüche 1 bis 9, **dadurch gekennzeichnet, daß** Auswerteeinheit (16) und Regeleinrichtung (24) integriert sind.

11. Transportsystem nach dem Oberbegriff von Anspruch 1, wobei die Pumpe drehzahlgeregelt ist, Einrichtungen zur Beeinflussung der Wärmetransportleistung im hydraulischen System angeordnet sind und durch mindestens eine zwischen einer Vorlaufleitung und einer Rücklaufleitung angeordnete Bypassleitung eine verbraucherseitige Veränderung einer Vorlauftemperatur im hydraulischen System erfolgt, **dadurch gekennzeichnet, daß** in einem Hauptstrang und/oder in mindestens einem Nebenstrang des hydraulischen Systems mindestens eine Drosselarmatur (2) in Kombination mit einer elektronischen Volumenstrommeßeinheit (3) eingebaut ist, daß der gemessene Volumenstrom in eine Steuer- oder Regeleinrichtung (24, 27, 28, 29 - 29.2) einfließt, daß eine gemessene Vorlauf- und/oder Rücklauftemperatur $T_V$, $T_{RL}$ in die Steuer- oder Regeleinrichtung (24, 27, 28, 29 - 29.2) einfließt und daß die Steuer- oder Regeleinrichtung (24, 27, 28, 29 - 29.2) über eine Stelleinrichtung (12, 12.2) die Drosselstellung einer oder mehrerer Drosselarmaturen (2, 2.1, 2.2) verändert.

12. Transportsystem nach einem oder mehreren der Ansprüche 1 bis 11, **dadurch gekennzeichnet, daß** die Steuer- oder Regeleinrichtung (24, 27, 28, 29 - 29.2) über eine Stelleinrichtung (1.1, 1.2, 20) die Drehzahl der Pumpe (1, 9 - 9.2) verändert.

13. Transportsystem nach Anspruch 12, **dadurch gekennzeichnet, daß** die Stelleinrichtung (1.1, 1.2, 20) als elektrische Stelleinrichtung ausgebildet ist.

14. Transportsystem nach einem oder mehreren der Ansprüche 1 bis 13, **dadurch gekennzeichnet, daß** die Steuer- oder Regeleinrichtung (24, 27, 28, 29 - 29.2) über Stelleinrichtungen (1.1, 1.2, 12, 12.2, 20) die Drosselstellung einer oder mehrerer Drosselarmaturen (2, 2.1, 2.2) und die Drehzahl der Pumpe (1, 9 - 9.2) verändert.

15. Transportsystem nach einem oder mehreren der Ansprüche 1 bis 14, **dadurch gekennzeichnet, daß** in dem hydraulischen System, in dem mindestens eine Drosselarmatur (2) in Kombination mit einer elektronischen Volumenstrommeßeinheit (3, 3.1, 3.2) eingebaut ist, eine selbstregelnde Pumpe mit vom Förderstrom abhängigen Förderhöhensollwert angeordnet ist.

16. Transportsystem nach einem oder mehreren der Ansprüche 1 bis 15, **dadurch gekennzeichnet, daß** eine elektronische Volumenstrommeßeinheit (3 - 3.2) in den Verbraucherkreisläufe (7, 8) im Bereich vor einem ersten Verbraucher V1 oder nach einem letzten Verbraucher Vx und zwischen den Einmündungsorten (33, 34) der Bypassleitung (10) angeordnet ist.

17. Transportsystem nach einem oder mehreren der Ansprüche 1 bis 16, **dadurch gekennzeichnet, daß** in einem mit einer Bypassleitung (10) ausgerüsteten Verbraucherkreislauf (7) mindestens zwei Volumenstrommeßeinheiten (3, 3.1, 3.2) angeordnet sind.

18. Transportsystem nach Anspruch 17, **dadurch gekennzeichnet, daß** eine der Volumenstrommeßeinheiten (3 - 3.2) einen Teilstrom des gesamten Förderstromes erfaßt.

19. Transportsystem nach einem oder mehreren der Ansprüche 1 bis 18, **dadurch gekennzeichnet, daß** in der Bypassleitung (10) eine Absperrarmatur mit Drosselfunktion (32) angeordnet ist.

20. Transportsystem nach einem oder mehreren der Ansprüche 1 bis 18, **dadurch gekennzeichnet, daß** in der Bypassleitung (10) eine federbelastete Überströmarmatur (32) oder ein Rückflußverhinderer (31) angeordnet ist.

21. Transportsystem nach einem oder mehreren der Ansprüche 1 bis 20, **dadurch gekennzeichnet, daß** die Auswerteeinheit (16) aus dem Signal der Volumenstrommeßeinheit (3 -3.2) eine Führungsgröße für die Steuer- oder Regeleinrichtung (24, 27, 28, 29 - 29.2) liefert.

22. Transportsystem nach Anspruch 21, **dadurch gekennzeichnet, daß** in der Auswerteeinheit (16) Grenzwerte für die Steuer- oder Regeleinrichtung (24, 27, 28, 29 - 29.2) gespeichert sind.

23. Transportsystem nach Anspruch 21 oder 22, **dadurch gekennzeichnet, daß** in der Auswerteeinheit (16) die Werte für einen maximalen Volumenstrom Qmax gespeichert sind.

24. Transportsystem nach Anspruch 21, 22 oder 23, **dadurch gekennzeichnet, daß** Führungsgrößen, Grenzwerte und der maximale Volumenstrom $Q_{max}$ in mindestens einer Auswerteeinheit (16) und/oder in der Steuer- oder Regeleinrichtung (24, 27, 28, 29 - 29.2) gespeichert sind.

25. Transportsystem nach einem der Ansprüche 1 bis 24, **dadurch gekennzeichnet, daß** die elektronische Volumenstrommeßeinheit (3 - 3.2) über einen Sensor und eine Auswerteeinheit (16) verfügt und daß die Auswerteeinheit (16) aus dem Sensorsignal ein Volumenstromsignal bildet.

26. Transportsystem nach einem der Ansprüche 1 bis 24, **dadurch gekennzeichnet, daß** die Auswerteeinheit (16) die von der Volumenstrommeßeinheit (3 - 3.2), einem zusätzlichen Temperatursensor oder von anderen Sensoren gelieferten Eingangssignale in elektronische Ausgangsgrößen für die Regel- und Steuereinrichtung (24, 27, 28, 29 - 29.2) umsetzt.

27. Transportsystem nach einem der Ansprüche 1 bis 26, **dadurch gekennzeichnet, daß** die Auswerteeinheit (16) über mindestens einen Microprozessor und hinterlegte Kennlinien, Einstellwerte, Algorithmen oder Fuzzy-Regeln zur Beeinflussung der Steuer- oder Regeleinrichtung (24, 27, 28, 29 - 29.2)verfügt.

28. Transportsystem nach einem der Ansprüche 1 bis 26, **dadurch gekennzeichnet, daß** die Steuer-öder Regeleinrichtung (24, 27, 28, 29 - 29.2) über mindestens einen Microprozessor und hinterlegte Kennlinien, Einstellwerte, Algorithmen oder Fuzzy-Regeln zur Beeinflussung des hydraulischen Transportsystems verfügt.

**Claims**

1. Transport system, having a liquid fluid for thermal energy transfer, in which at least one pump in a hydraulic system recirculates a fluid between generator and consumer, overcoming resistances presented by the pipeline system, the consumers form variable or fixed resistances in the hydraulic system and there is a device for influencing the heat transport capacity, in particular by changing a feed temperature in the hydraulic system, **characterized in that** a throttling fitting (2) with an electronic volumetric flow-measuring unit (3) is installed in a main section and/or in at least one auxiliary section of the hydraulic system, **in that** the measured volumetric flow is input as an actual value to a control device, a regulating device (19, 24) or an evaluation unit (16), **in that** the evaluation unit (16) supplies a guide variable for the regulating devices (23, 24), and **in that** the regulating device (23, 24) uses an actuating device (12, 22) to change the rotational speed of the pump (1, 9, 31) and/or the throttle position of one or more throttling fittings (2, 2.1, 2.2).

2. Transport system according to Claim 1, **characterized in that** the throttling fitting (2, 2.1, 2.2) and/or the electronic volumetric flow-measuring unit (3) is provided with a temperature sensor.

3. Transport system according to Claim 1 or 2, **characterized in that** the throttling fitting (2, 2.1, 2.2) is provided with an actuating drive (12).

4. Transport system according to Claim 3, **characterized in that** the electronic evaluation unit (16) of the throttling fitting (2, 2.1, 2.2) is connected to a temperature sensor which records the temperature inside or outside the hydraulic system.

5. Transport system according to Claim 4, **characterized in that** the temperature sensor records the feed temperature and/or return temperature of the hydraulic system.

6. Transport system according to one of Claims 1 to 5, **characterized in that** one or more throttling fittings (2, 2.1, 2.2) with integrated electronic volumetric flow-measuring unit (3) and evaluation unit (16) are arranged in generator circuits, intermediate circuits and/or consumer circuits of the transport system.

7. Transport system according to one of Claims 1 to 6, **characterized in that** the throttling fitting (2, 2.1, 2.2) monitors the pump delivery flow and, in the event of measured deviations from a predetermined regulating characteristic line, shifts the working point of the pump (1) by temporarily changing the through-flow quantity.

8. Transport system according to one of Claims 1 to 7, **characterized in that** the throttling fitting (2, 2.1, 2.2) records the volumetric flow of a section (7, 8), **in that** the instantaneous volumetric flow is throttled in the event of volumetric flow values which have been predetermined to the evaluation unit (16) and/or the regulating device (24) being exceeded.

9. Transport system according to one of Claims 1 to 8, **characterized in that** a plurality of characteristic line points and/or characteristic line curves for generating a guide variable for the regulating device (23) are stored in the electronic evaluation unit (16) of the throttling fitting (2, 2.1, 2.2).

10. Transport system according to one or more of Claims 1 to 9, **characterized in that** evaluation unit (16) and regulating device (24) are integrated.

11. Transport system according to the preamble of Claim 1, in which the pump is subjected to rotational speed control, devices for influencing the heat transport capacity are arranged in the hydraulic system and a feed temperature in the hydraulic system is changed on the consumer side by at least one bypass line arranged between a feed line and a return line, **characterized in that** at least one throttling fitting (2) in combination with an electronic volumetric flow-measuring unit (3) is installed in a main section and/or in at least one auxiliary section of the hydraulic system, **in that** the measured volumetric flow is input to a control or regulating device (24, 27, 28, 29-29.2), **in that** a measured feed temperature and/or return temperature $T_V$, $T_{RL}$ is input to the control or regulating device (24, 27, 28, 29-29.2), and **in that** the control or regulating device (24, 27, 28, 29-29.2) uses an actuating device (12, 12.2) to change the throttle position of one or more throttling fittings (2, 2.1, 2.2).

12. Transport system according to one or more of Claims 1 to 11, **characterized in that** the control or regulating device (24, 27, 28, 29-29.2) uses an actuating device (1.1, 1.2, 20) to change the rotational speed of the pump (1, 9-9.2).

13. Transport system according to Claim 12, **characterized in that** the actuating device (1.1, 1.2, 20) is designed as an electrical actuating device.

14. Transport system according to one or more of Claims 1 to 13, **characterized in that** the control or regulating device (24, 27, 28, 29-29.2) uses actuating devices (1.1, 1.2, 12, 12.2, 20) to change the throttle position of one or more throttling fittings (2, 2.1, 2.2) and the rotational speed of the pump (1,9-9.2).

15. Transport system according to one or more of Claims 1 to 14, **characterized in that** a self-regulating pump with a delivery level set value which is dependent on the delivery flow is arranged in the hydraulic system, in which at least one throttling fitting (2) is installed in combination with an electronic volumetric flow-measuring unit (3, 3.1, 3.2).

16. Transport system according to one or more of Claims 1 to 15, **characterized in that** an electronic volumetric flow-measuring unit (3-3.2) is arranged in the consumer circuits (7, 8) in the region upstream of a first consumer V1 or downstream of a final consumer Vx and between the locations (33, 34) where the bypass line (10) opens out.

17. Transport system according to one or more of Claims 1 to 16, **characterized in that** at least two volumetric flow-measuring units (3, 3.1, 3.2) are arranged in a consumer circuit (7) equipped with a bypass line (10).

18. Transport system according to Claim 17, **characterized in that** one of the volumetric flow-measuring units (3-3.2) records a partial stream of the total delivery flow.

19. Transport system according to one or more of Claims 1 to 18, **characterized in that** a shut-off fitting with a throttling function (32) is arranged in the bypass line (10).

20. Transport system according to one or more of Claims 1 to 18, **characterized in that** a spring-loaded overflow fitting (32) or a backflow preventer (31) is arranged in the bypass line (10).

21. Transport system according to one or more of Claims 1 to 20, **characterized in that** the evaluation unit (16) uses the signal from the volumetric flow-measuring unit (3-3.2) to supply a guide variable for the control or regulating device (24, 27, 28, 29-29.2).

22. Transport system according to Claim 21, **characterized in that** limit values for the control or regulating device (24, 27, 28, 29-29.2) are stored in the evaluation unit (16).

23. Transport system according to Claim 21 or 22, **characterized in that** the values for a maximum volumetric flow $Q_{max}$ are stored in the evaluation unit (16).

24. Transport system according to Claim 21, 22 or 23, **characterized in that** guide variables, limit values and the maximum volumetric flow $Q_{max}$ are stored in at least one evaluation unit (16) and/or in the control or regulating device (24, 27, 28, 29-29.2).

25. Transport system according to one of Claims 1 to 24, **characterized in that** the electronic volumetric flow-measuring unit (3-3.2) has a sensor and an evaluation unit (16), and **in that** the evaluation unit (16) forms a volumetric flow signal from the sensor signal.

26. Transport system according to one of Claims 1 to 24, **characterized in that** the evaluation unit (16) converts the input signals supplied by the volumetric flow-measuring unit (3-3.2), an additional temperature sensor or by other sensors into electronic output variables for the regulating and control device (24, 27, 28, 29-29.2).

27. Transport system according to one of Claims 1 to 26, **characterized in that** the evaluation unit (16) has at least one microprocessor and stored characteristic lines, setting values, algorithms or fuzzy rules for influencing the control or regulating device (24, 27, 28, 29-29.2).

28. Transport system according to one of Claims 1 to 26, **characterized in that** the control or regulating device (24, 27, 28, 29-29.2) has at least one microprocessor and stored characteristic lines, setting values, algorithms or fuzzy rules for influencing the hydraulic transport system.

**Revendications**

1. Système de transport comprenant un fluide liquide pour la transmission d'énergie thermique, au moins une pompe dans un circuit hydraulique faisant circuler un fluide entre le générateur et le consommateur en surmontant les résistances du réseau de tuyaux, les consommateurs dans le circuit hydraulique représentant des résistances variables ou fixes et un dispositif destiné à influencer la capacité de transport calorifique, notamment en modifiant la température d'arrivée, étant disposé dans le circuit hydraulique, **caractérisé en ce que** dans une branche principale et/ou dans au moins une branche secondaire du circuit hydraulique est monté un robinet d'étranglement (2) muni d'un module électronique de mesure du débit volumique (3), que le débit volumique mesuré est acheminé sous la forme d'une valeur réelle dans un dispositif de commande, un dispositif de régulation (19, 24) ou un module d'analyse (16), que le module d'analyse (16) délivre une grandeur de référence pour les dispositifs de régulation (23, 24) et que le dispositif de régulation (23, 24) modifie la vitesse de rotation de la pompe (1, 9, 31) et/ou la position de l'obturateur d'un ou de plusieurs robinets d'étranglement (2, 2.1, 2.2) par le biais d'un dispositif de réglage (12, 22).

2. Système de transport selon la revendication 1, **caractérisé en ce que** le robinet d'étranglement (2, 2.1, 2.2) et/ou le module de mesure du débit volumique (3) est muni d'une sonde de température.

3. Système de transport selon la revendication 1 ou 2, **caractérisé en ce que** le robinet d'étranglement (2, 2.1, 2.2) est muni d'un servomoteur (12).

4. Système de transport selon la revendication 3, **caractérisé en ce que** le module d'analyse électronique (16) du robinet d'étranglement (2, 2.1, 2.2) est relié avec une sonde de température qui détecte la température à l'intérieur ou à l'extérieur du circuit hydraulique.

5. Système de transport selon la revendication 4, **caractérisé en ce que** la sonde de température détecte la température d'arrivée et/ou la température de retour du circuit hydraulique.

6. Système de transport selon l'une des revendications 1 à 5, **caractérisé en ce qu'**un ou plusieurs robinets d'étranglement (2, 2.1, 2.2) dans lesquels sont intégrés un module électronique de mesure du débit volumique (3) et un module d'analyse (16) sont disposés dans les circuits de production, les circuits intermédiaires et/ou les circuits de consommation du système de transport.

7. Système de transport selon l'une des revendications 1 à 6, **caractérisé en ce que** le robinet d'étranglement (2, 2.1, 2.2) contrôle le courant transporté par la pompe et, en présence de variations mesurées par rapport à une courbe de régulation prédéfinie, décale le point de fonctionnement de la pompe (1) par une modification temporaire du débit volumique.

8. Système de transport selon l'une des revendications 1 à 7, **caractérisé en ce que** le robinet d'étranglement (2, 2.1, 2.2) détecte le débit volumique d'une branche (7, 8), qu'un étranglement du débit volumique momentané a lieu en cas de dépassement de valeurs du débit volumique prédéfinies dans le module d'analyse (16) et/ou le dispositif de régulation (24).

9. Système de transport selon l'une des revendications 1 à 8, **caractérisé en ce que** plusieurs points de la courbe caractéristique et/ou courbes caractéristiques sont enregistrés dans le module d'analyse électronique (16) du robinet d'étranglement (2, 2.1, 2.2) pour générer une grandeur de référence pour le dispositif de régulation (23).

10. Système de transport selon une ou plusieurs des revendications 1 à 9, **caractérisé en ce que** le module d'analyse (16) et le dispositif de régulation (24) sont intégrés.

11. Système de transport selon le préambule de la revendication 1, la vitesse de rotation de la pompe étant régulée, des dispositifs destinés à influencer la capacité de transport calorifique étant intégrés dans le circuit hydraulique et une modification par l'utilisateur d'une température d'arrivée dans le circuit hydraulique étant effectuée par le biais d'au moins une conduite de dérivation disposée entre une conduite d'arrivée et une conduite de retour, **caractérisé en ce que** dans une branche principale et/ou dans au moins une branche secondaire du circuit hydraulique est monté au moins un robinet d'étranglement (2) en combinaison avec un module électronique de mesure du débit volumique (3), que le débit volumique mesuré est acheminé dans un dispositif de commande ou de régulation (24, 27, 28, 29 - 29.2), qu'une température mesurée d'arrivée et/ou de retour $T_V$, $T_{RL}$ est acheminée dans le dispositif de commande ou de régulation (24, 27, 28, 29 - 29.2) et que le dispositif de commande ou de régulation (24, 27, 28, 29 - 29.2) modifie la position de l'obturateur d'un ou de plusieurs robinets d'étranglement (2, 2.1, 2.2) par le biais d'un dispositif de réglage (12, 12.2).

12. Système de transport selon une ou plusieurs des revendications 1 à 11, **caractérisé en ce que** le dispositif de commande ou de régulation (24, 27, 28, 29 - 29.2) modifie la vitesse de rotation de la pompe (1, 9 - 9.2) par le biais d'un dispositif de réglage (1.1, 1.2, 20).

13. Système de transport selon la revendication 12, **caractérisé en ce que** le dispositif de réglage (1.1, 1.2, 20) est réalisé sous la forme d'un dispositif de réglage électrique.

14. Système de transport selon une ou plusieurs des revendications 1 à 13, **caractérisé en ce que** le dispositif de commande ou de régulation (24, 27, 28, 29 - 29.2) modifie la position de l'obturateur d'un ou de plusieurs robinets d'étranglement (2, 2.1, 2.2) et la vitesse de rotation de la pompe (1, 9 - 9.2) par le biais de dispositifs de réglage (1.1, 1.2, 12, 12.2, 20).

15. Système de transport selon une ou plusieurs des revendications 1 à 14, **caractérisé en ce que** dans le circuit hydraulique dans lequel est intégré au moins un robinet d'étranglement (2) en combinaison avec un module électronique de mesure du débit volumique (3, 3.1, 3.2) est montée une pompe à auto-régulation dont la consigne de hauteur de refoulement dépend du courant de transport.

16. Système de transport selon une ou plusieurs des revendications 1 à 15, **caractérisé en ce qu'**un module électronique de mesure du débit volumique (3 - 3.2) est disposé dans les circuits de consommation (7, 8) dans la zone avant un premier consommateur V1 ou après un dernier consommateur Vx et entre les points de débouché (33, 34) de la conduite de dérivation (10).

17. Système de transport selon une ou plusieurs des revendications 1 à 16, **caractérisé en ce qu'**au moins deux modules de mesure du débit volumique (3, 3.1, 3.2) sont disposés dans un circuit de consommation (7) équipé d'une conduite de dérivation (10).

18. Système de transport selon la revendication 17, **caractérisé en ce que** l'un des modules de mesure du débit volumique (3 - 3.2) détecte un courant partiel du courant de transport total.

19. Système de transport selon une ou plusieurs des revendications 1 à 18, **caractérisé en ce qu'**un robinet d'arrêt avec fonction d'étranglement (32) est disposé dans la conduite de dérivation (10).

20. Système de transport selon une ou plusieurs des revendications 1 à 18, **caractérisé en ce qu'**un robinet de trop-plein (32) à ressort ou un clapet anti-retour (31) est disposé dans la conduite de dérivation (10).

21. Système de transport selon une ou plusieurs des revendications 1 à 20, **caractérisé en ce que** le module d'analyse (16) délivre une grandeur de référence pour le dispositif de commande ou de régulation (24, 27, 28, 29 - 29.2) à partir du signal du module de mesure du débit volumique (3 - 3.2).

22. Système de transport selon la revendication 21, **caractérisé en ce que** des valeurs limites pour le dispositif de commande ou de régulation (24, 27, 28, 29 - 29.2) sont enregistrées dans le module d'analyse (16).

23. Système de transport selon la revendication 21 ou 22, **caractérisé en ce que** les valeurs d'un débit volumique maximum $Q_{max}$ sont enregistrées dans le module d'analyse (16).

24. Système de transport selon la revendication 21, 22 ou 23, **caractérisé en ce que** les grandeurs de référence, les valeurs limites et le débit volumique maximum $Q_{max}$ sont enregistrés dans au moins un module d'analyse (16) et/ou dans le dispositif de commande ou de régulation (24, 27, 28, 29 - 29.2).

25. Système de transport selon l'une des revendications 1 à 24, **caractérisé en ce que** le module électronique de mesure du débit volumique (3 - 3.2) dispose d'un capteur et d'un module d'analyse (16) et que le module d'analyse (16) forme un signal de débit volumique à partir du signal du capteur.

26. Système de transport selon l'une des revendications 1 à 24, **caractérisé en ce que** le module d'analyse (16) convertit les signaux d'entrée délivrés par le module de mesure du débit volumique (3 - 3.2), une sonde de température supplémentaire ou d'autres capteurs en grandeurs de sortie électroniques pour le dispositif de commande et de régulation (24, 27, 28, 29 - 29.2).

27. Système de transport selon l'une des revendications 1 à 26, **caractérisé en ce que** le module d'analyse (16) dispose d'au moins un microprocesseur et de courbes caractéristiques, valeurs de réglage, algorithmes ou règles de logique floue intégrés pour influencer le dispositif de commande ou de régulation (24, 27, 28, 29 - 29.2).

28. Système de transport selon l'une des revendications 1 à 26, **caractérisé en ce que** le dispositif de commande ou de régulation (24, 27, 28, 29 - 29.2) dispose d'au moins un microprocesseur et de courbes caractéristiques, valeurs de réglage, algorithmes ou règles de logique floue intégrés pour influencer le système de transport hydraulique.

Fig.1

Fig.2

**EP 1 163 478 B1**

Fig.3

Fig.4

## Fig.5

## Fig.6

# Fig.7

# Fig.8

## Fig.9

## Fig.10

Fig.11

24  12  2  3  16  22  20  23  21  19

$T_A$

1

Δp

Q

FU

V₁    V₂

Fig.12

Anlagenkennlinien

H

Pumpe1    Pumpe1+2

BP1

H100    BP2

BP3

RK

Q40    Q80    Q100    Q

60    80    90    Vorlauftemperatur in °C

+5    -8    -12    Außentemperatur in °C

EP 1 163 478 B1

Fig.13

Fig.14

25

**Fig.15**

**Fig.16**

# Fig.17

Fig.18

## Fig.19

# Fig.20